# EUROPEAN PATENT APPLICATION

(11) **EP 2 453 342 A2**
(43) Date of publication of application: **16.05.2012**
(21) Application number: 11003138.2
(22) Date of filing: 13.04.2011
(51) Int. Cl.: G06F 3/048, G06F 3/01, G06F 3/03

(54) **Method for providing display image in multimedia device and device thereof**

(30) Priority: 12.11.2010 KR 20100112529
(71) Applicant: LG Electronics Inc., Seoul 150-721 (KR)
(72) Inventor: Kang, Mingoo, Pyeongtaek-si Gyeonggi-do 451-731 (KR)
(74) Representative: Katérle, Axel

(57) **Abstract**

A display device includes a sensor to track movement of at least one body part of a person and a processor to compare an amount of the tracked movement to a reference value, recognize a position shift when the amount of tracked movement exceeds the reference value, and perform a predetermined function of the display device based on the position shift.

## Description

### 1. Field

One or more embodiments described herein relate to a display device.

### 2. Background

A variety of command input techniques have been developed for televisions, computers, mobile terminals, and other types of display devices. However, improvements are needed, especially in order to satisfy the requirements of the ever-increasing variety of multimedia services that are expected to be offered to the consumer through these devices.

### BRIEF DESCRIPTION OF THE DRAWINGS

FIG. 1 shows one type of multimedia system.

FIG. 2 shows an example of a multimedia device in this system.

FIG. 3 shows a multimedia device having heterogeneous images sensors.

FIG. 4 shows one embodiment of a detection/recognition procedure performed using the heterogeneous image sensors of the multimedia device.

FIG. 5 shows a list of face vectors stored in a database.

FIG. 6 shows one way in which a plurality of heterogeneous image sensors may interact with a multimedia device based on hardware and software.

FIG. 7 shows another embodiment that includes heterogeneous image sensors and a multimedia device.

FIG. 8 shows another embodiment of heterogeneous image sensors and a multimedia device.

FIG. 9 shows another embodiment having heterogeneous image sensors.

FIG. 10 shows an example of an image sensor.

FIG. 11 shows another example of an image sensor.

FIG. 12 shows one way of calculating distance using an image sensor.

FIG. 13 shows one embodiment of a multimedia device which, for example, may be included in FIGS. 1 or FIG. 2.

FIG. 14 shows how a multimedia device may be configured in accordance with one or more embodiments described herein.

FIG. 15 shows an example of an image generated based on a depth image sensor, which image includes coordinates corresponding to various body parts of a person.

FIG. 16 shows an embodiment for adjusting a display screen.

FIG. 17 shows an example of a gesture for adjusting a display screen.

FIG. 18 shows an example of a position for adjusting a display screen.

FIG. 19 shows adjustment of a display screen based on distance.

FIG. 20 shows another embodiment of a display screen adjustment.

FIG. 21 shows another embodiment of a display screen adjustment.

FIG. 22 shows positions of a multimedia device and user.

FIG. 23 shows changing a menu screen of the multimedia device.

FIG. 24 shows changing a volume of the multimedia device.

FIG. 25 shows another embodiment of a display screen adjustment involving aspect ratio changes.

FIG. 26 shows another embodiment involving changes between two-dimensional and three-dimensional image formats.

### DETAILED DESCRIPTION

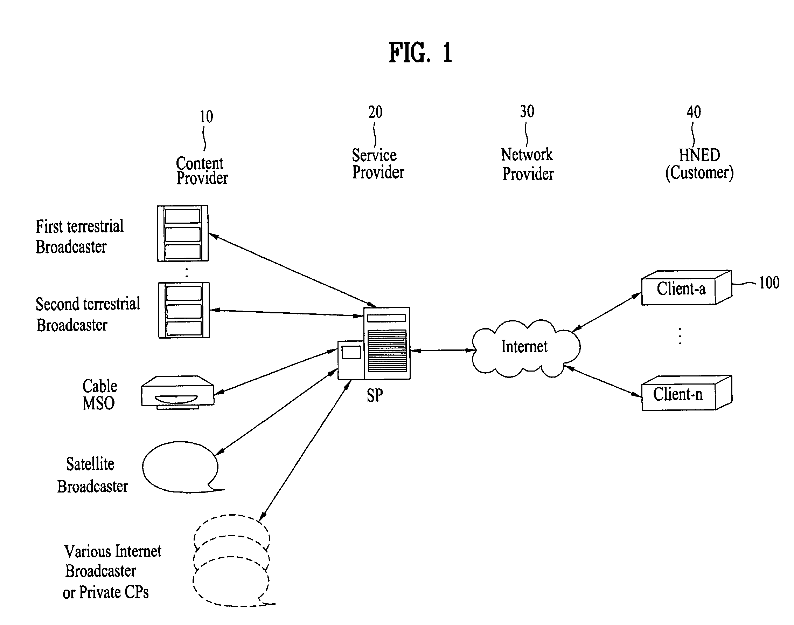

FIG. 1 shows a system that includes a multimedia device. The multimedia device may correspond to a television, computer display, mobile terminal, or any other device capable of displaying information on a screen. As illustrated in FIG. 1, the system includes a content provider (CP) 10, a service provider (SP) 20, a network provider (NP) 30, and a home network end user (HNED) 40. The HNED 40 corresponds to, for example, a client 100 which is a multimedia device.

The content provider 10 manufactures various contents and provides them. Examples of the content provider 10 include a terrestrial broadcaster, a cable system operator (SO), a multiple system operator (MSO), a satellite broadcaster, and an Internet broadcaster, as illustrated in FIG. 1. Also, the content provider 10 may provide various applications in addition to broadcast contents.

The service provider 20 can provide contents provided by the content provider 10 by service-packaging them. For example, the service provider 20 of FIG. 1 can package first terrestrial broadcasting, second terrestrial broadcasting, cable MSO, satellite broadcasting, various kinds of Internet broadcasting, application, etc. and provide the packaged one to a user.

The network provider 30 may provide a network for providing a service to the client 100. The client 100 may construct a home network end user (HNED) to receive a service.

The client 100 may provide contents through the network. In this case, the client 100 may be a content provider contrary to the above. The content provider 10 may receive contents from the client 100. In this case, it is advantageous in that bidirectional content service or data service is available.

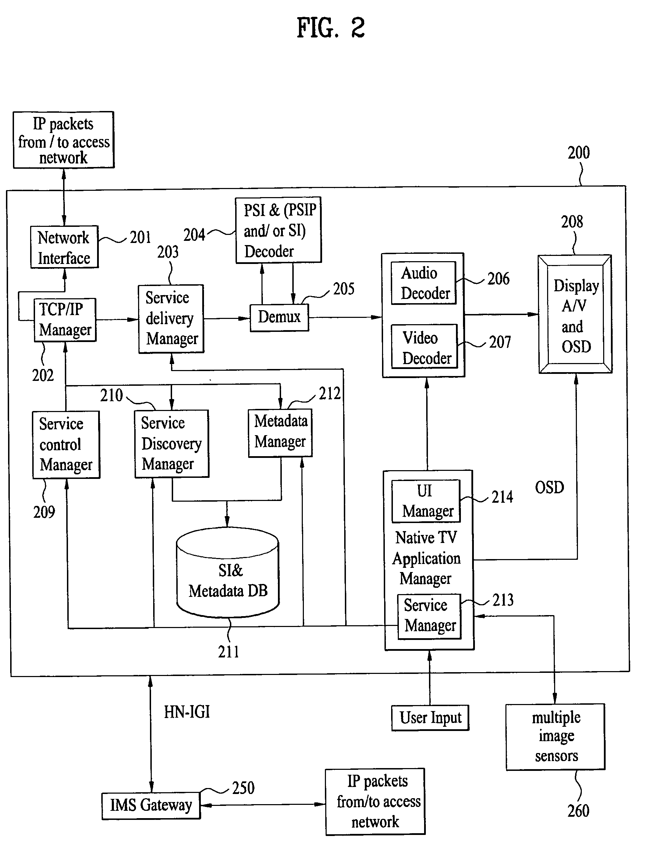

FIG. 2 shows an example of the multimedia device illustrated in FIG. 1, which includes a network interface 201, a TCP/IP manager 202, a service delivery manager 203, a demultiplexer (Demux) 205, a PSI& (PSIP and/or SI) decoder 204, an audio decoder 206, a video decoder 207, a display A/V and OSD module 208, a service control manager 209, a service discovery manager 210, a metadata manager 212, an SI&Metadata DB 211, a UI manager 214, and a service manager 213.

Moreover, a plurality of heterogeneous image sensors 260 are connected with the multimedia device 200, by a connection mode of a USB mode, for example. Also, although the plurality of heterogeneous image sensors 260 are designed as separate modules in FIG. 2, the plurality of heterogeneous images sensors 260 may be designed in such a manner that they are housed in the multimedia device 200.

The network interface 201 receives packets from a network, and transmits the packets to the network. In other words, the network interface 201 receives services, contents, etc. from the service provider through the network.

The TCP/IP manager 202 is involved in packets received in the multimedia device 200 and packets transmitted from the multimedia device 200, i.e., packet transfer from the source to the destination. The service delivery manager 203 takes the role of control of received service data. For example, if the service delivery manager 203 controls real-time streaming data, it can use RTP/RTCP.

If the service delivery manager 203 transmits the real-time streaming data by using RTP, it parses the received packets in accordance with RTP and transmits the parsed packets to the demultiplexer 205 or stores the parsed packets in the SI&Metadata DB 211 under the control of the service manager 213. The service delivery manager 203 feeds the received information back to a server, which provides a service, by using RTCP.

The demultiplexer 205 demultiplexes the received packets to audio, video and PSI (Program Specific Information) data and then transmits the demultiplexed data to the audio decoder 206, the video decoder 207, and the PSI&(PSIP and/or SI) decoder 204, respectively.

The PSI&(PSIP and/or SI) decoder 204 receives and decodes PSI section, PSIP (Program and Service Information Protocol) section or SI (Service Information) section, which is demultiplexed by the demultiplexer 205.

Also, the PSI&(PSIP and/or SI) decoder 204 decodes the received sections to make a database for service information, and stores the database for service information in the SI&Metadata DB 211.

The audio/video decoders 206/207 decode the video data and the audio data, which are received from the demultiplexer 205.

The UI manager 214 provides a graphic user interface (GUI) for the user by using an on screen display (OSD), etc. and performs a receiving operation based on a key input from the user. For example, if a key input signal for channel selection is input from the user, UI manager 214 transmits the key input signal to service manager 213.

The service manager 213 controls managers related to the service, such as the service delivery manager 203, the service discovery manager 210, the service control manager 209, and the metadata manager 212.

Also, the service manager 213 makes a channel map and selects a channel by using the channel map in accordance with the key input signal received from the UI manager 214. The service discovery manager 210 provides information required to select the service provider that provides services. If a signal related to channel selection is received from the service manager 213, the service discovery manager 210 discovers a corresponding service by using the received information.

The service control manager 209 takes the role of selection and control of the service. For example, if the user selects a live broadcasting service like the existing broadcasting mode, the service control manager 209 uses IGMP or RTSP. If the user selects a video on demand (VOD) service, the service control manager 209 selects and controls the service by using RTSP. The metadata manager 212 manages metadata related to the service and stores the metadata in the SI&Metadata DB 211.

The SI&Metadata DB 211 stores the service information decoded by the PSI&(PSIP and/or SI) decoder 204, the metadata managed by the metadata manager 212, and the information required to select the service provider provided by the service discovery manager 210. Also, SI&Metadata DB 211 may store setup data for the system.

The IG 250 is a gateway where functions required to access IMS based IPTV services are collected.

The plurality of heterogeneous image sensors 260 illustrated in FIG. 2 are designed to take a single image or a plurality of images of a person or object located in the periphery of the multimedia device 200. In more detail, the plurality of heterogeneous image sensors 260 are designed to operate the single image or the plurality of images continuously, periodically, at a selected time, or at a specific condition only, as described later in more detail.

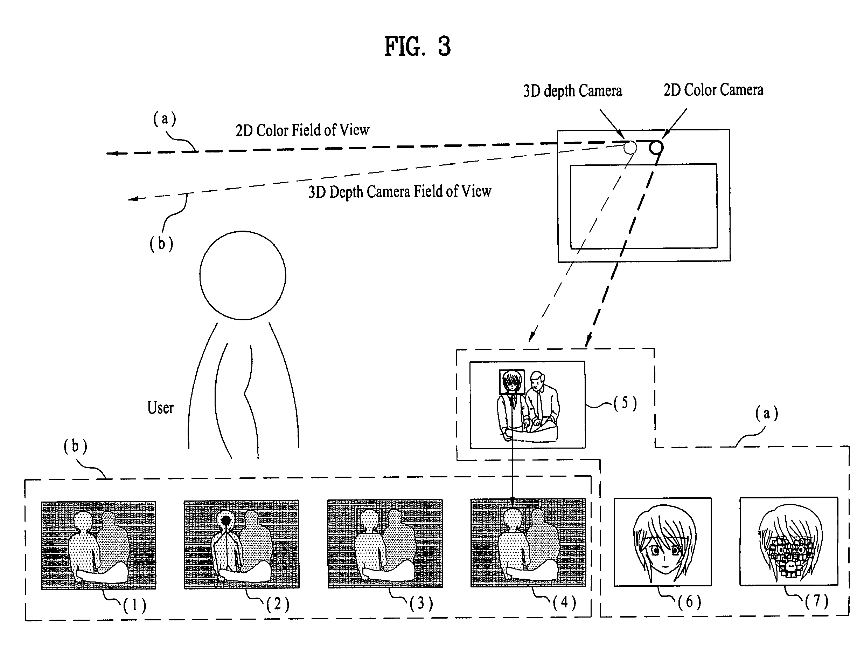

FIG. 3 shows a multimedia device based on a plurality of heterogeneous images sensors and camera-taking screens. A first image sensor(s) related to depth data processing include a field not suitable for long-distance face recognition due to limited resolution (for example, maximum VGA level) and a recognition distance (for example, 3.5m). Also, the second image sensors related to color data processing have drawbacks in that they have a slow recognition speed and are not robust to light condition.

Accordingly, the multimedia device is designed to interact with a hybrid type image sensor module that is a hybrid type of the first image sensor and the second image sensor.

An IR camera or depth camera is used as the first image sensor. In more detail, a time of flight (TOF) type IR camera or depth camera and a structured light type IR camera or depth camera have been discussed. The TOF type IR camera or depth camera calculates distance information by using the time difference resulting from emission of infrared rays. The structured light type IR camera or depth camera calculates distance information by emitting infrared rays to a specific pattern and analyzing a modified pattern.

The first image sensor is advantageous in view of depth data recognition and processing speed, and easily senses object, person, etc. even at a dark place. However, the first image sensor has a drawback in that it has low resolution at a long distance.

Moreover, a color camera or RGB camera is used as the second image sensor. In more detail, a stereo camera type color camera or RGB camera and a mono camera type color camera or RGB camera have been discussed. The stereo camera type color camera or RGB camera detects and traces the hand or face based on image time comparison information taken through two cameras. The mono camera type color camera or RGB camera detects and traces the hand or face based on shape and color information taken through one camera.

The second image sensor is advantageous in that it has more improved resolution than that of the first image sensor, whereas the second image sensor has drawbacks in that it is vulnerable to peripheral lighting and it is difficult to recognize the corresponding object at a dark place. In particular, the second image sensor has a drawback in that it is difficult to recognize exact depth.

As illustrated in FIG. 3, one embodiment of the multimedia device is designed to have both the first image sensor and the second image sensor. The image sensors may be designed in such a manner that they are embedded in the multimedia device, or may be designed as separate hardware modules. As illustrated in FIG. 3(b), the first image sensor takes images that include users located in the periphery of the multimedia device. Detailed taking-images are illustrated in (1), (2), (3) and (4) of FIG. 3 in due order.

If image-taking and data analysis of the first image sensor are completed, as illustrated in FIG. 3(a), the second image sensor takes images of a face of a specific user. Detailed taking-images are illustrated in (5), (6), and (7) of FIG. 3 in due order.

The first image sensor of the plurality of heterogeneous image sensors according to one embodiment of the present invention takes first images located in the periphery of the multimedia device and extracts depth data from the taken first images. As illustrated in (1) of FIG. 3, the first image sensor can be designed in such a manner that a field of each object is displayed at different contrast ratios depending on the distance.

Moreover, the first image sensor can recognize a face of at least one user by using the extracted depth data. In other words, the first image sensor extracts body information (for example, face, hand, foot, joint, etc.) of the user by using the database, etc., as illustrated in (2) of FIG. 3, and acquires location coordinates and distance information of a face of a specific user as illustrated in (3) of FIG. 3.

In more detail, the first image sensor is designed to calculate values x, y, and z which are location information on the face of the user, wherein the x means the location on a horizontal axis of the face in the taken first image, the y means the location on a vertical axis of the face in the taken first image, and the z means the distance between the face of the user and the first image sensor.

Also, among the plurality of heterogeneous image sensors, the second image sensor for extracting color images takes second images of the recognized face of the user, and is illustrated in (5) of FIG. 3.

If the first image sensor and the second image sensor illustrated in FIG. 3 are designed to adjoin each other, an error due to the difference in physical location may be disregarded. However, according to another embodiment, the second image sensor is designed to compensate for the coordinate information or distance information acquired by the first image sensor by using the information on the difference in physical location and to take the user by using the compensated coordinate information or distance information.

Also, if the first image sensor and the second image sensor are designed to be arranged horizontally from the ground, the information on the difference in physical location can be set based on a horizontal frame. The second image sensor, as illustrated in (7) of FIG. 3, extracts feature information from the taken second image. The feature information is data corresponding to a specific part (for example, mouse, nose, eye, etc.) for identifying a plurality of users who use the multimedia device.

Moreover, the second image sensor may zoom in a zone corresponding to the face of the user based on the coordinate values (the values x, y, and z) obtained through image-taking of the first image sensor. This means a procedure of switching from (5) of FIG. 3 to (6) of FIG. 3.

If image-taking and analysis of the first image sensor and the second image sensor are completely performed, the multimedia device according to one embodiment of the present invention accesses a memory that stores data corresponding to the extracted feature information, and extracts information for identifying a specific user stored in the memory.

If the information for identifying a specific user exists in the memory, the multimedia device provides a service previously set for the specific user.

On the other hand, if the information for identifying a specific user does not exist in the memory, the multimedia device is designed to display a guide message for storing the recognized user information in the memory.

As described above, according to one embodiment, the first image sensor is designed to detect user location information or coordinate information on the face of the user while the second image sensor is designed to recognize the face by using the data acquired by the first image sensor.

According to another embodiment, the second image sensor is designed in such a manner that it is operated only in case of a specific condition. For example, if the distance information acquired by the operation of the first image sensor between the user and the first image sensor is less than a first reference value, or if a recognition rate on the face of the user, which is acquired by the operation of the first image sensor, is more than a second reference value, the face of the user located in the periphery of the multimedia device is detected and recognized by the first image sensor only.

On the other hand, if the distance information acquired by the operation of the first image sensor exceeds the first reference value, or if the recognition rate on the face of the user, which is acquired by the operation of the first image sensor, is less than the second reference value, the second image sensor is additionally used to recognize the face of the user.

According to another embodiment, the second image sensor is designed to perform zoom-in by using the distance information acquired by the first image sensor in the procedure of recognizing the face of the user and to take the face only by using face coordinate information acquired by the first image sensor.

Accordingly, the different types of heterogeneous image sensors are used as above, it is advantageous in that it enables long-distance face recognition and data processing speed is more improved than that of the related art.

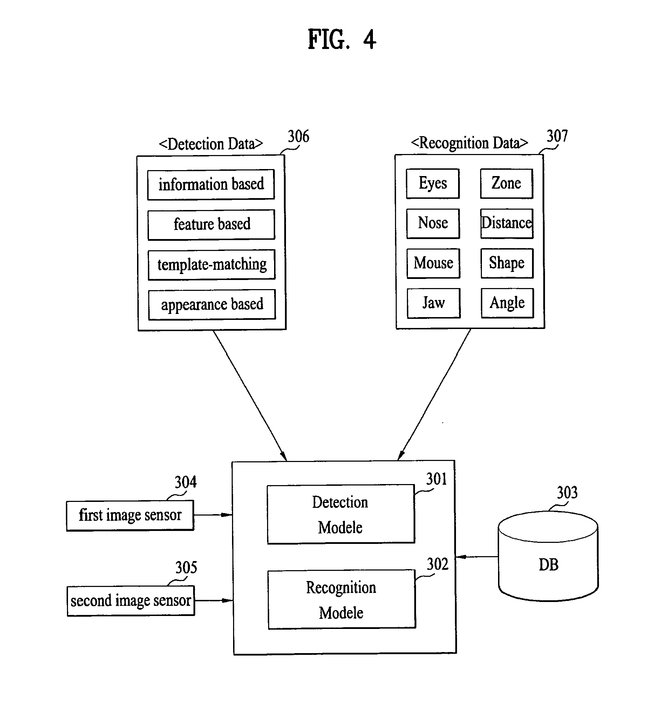

FIG. 4 shows a procedure for using detection data and recognition data in a plurality of heterogeneous image sensors and a multimedia device. Face detection is performed by a process different from that of face recognition. The face detection includes a process of detecting a face zone within one image, whereas the face recognition is a process of recognizing whether the detected face corresponds to which specific user. In particular, the procedure of performing face detection by using the first image sensor and the procedure of performing face recognition by using the second image sensor in accordance with one embodiment will be described with reference to FIG. 4.

As illustrated in FIG. 4, the multimedia device according to one embodiment includes a detection module 301, a recognition module 302, a database (DB) 303, a first image sensor 304, and a second image sensor 305. The multimedia device uses detection data 306 and recognition data 307 if necessary. The detection data 306, for example, may be generated based on knowledge-based detection techniques, feature-based detection techniques, template matching techniques, and appearance-based detection techniques. Also, the recognition data 307, for example, include data for identifying a specific user, such as eyes, nose, mouse, jaw, zone, distance, shape, and angle.

Moreover, the detection module 301 determines the presence of the face of the user by using the image data received from the first image sensor 304. Also, in a procedure of estimating the zone where the face of the user is located, data related to the aforementioned knowledge-based detection techniques, feature-based detection techniques, template matching techniques, and appearance-based detection techniques are used.

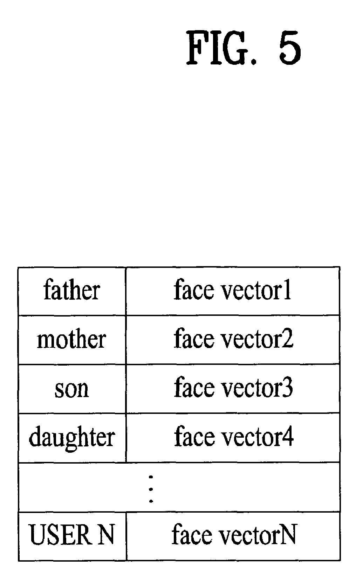

The recognition module 302 identifies whether the recognized user is a specific user by using the image data received from the second image sensor 305. At this time, the recognition module 302 compares the received image data with face vector information stored in the DB 303 based on the aforementioned recognition data 307. This will be described in more detail with reference to FIG. 5.

FIG. 5 shows a list of face vectors stored in a database. As illustrated in FIG. 5, face vectors of users who use the multimedia device according to one embodiment of the present invention are stored in the database. The face vectors, for example are a data set of feature information appearing on the faces of the users, and are used to identify each of the specific users.

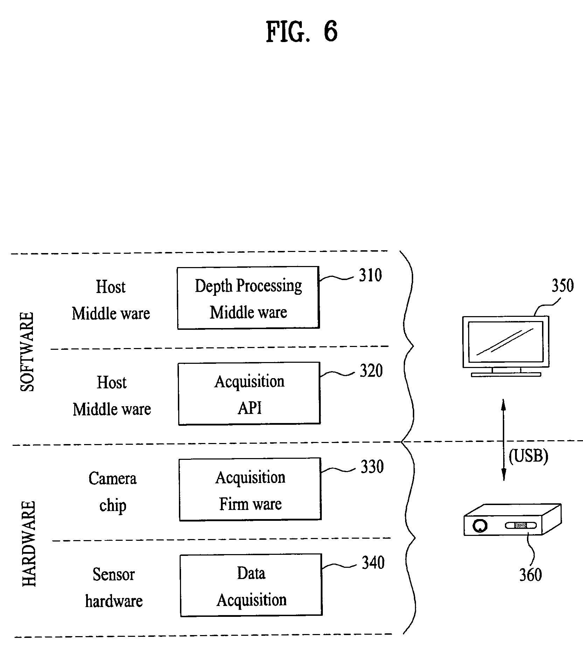

FIG. 6 shows one example of an operation of a plurality of heterogeneous image sensors, which interact with a multimedia device based on hardware and software. As illustrated in FIG. 6, the operation of the multimedia device, which is performed through images input by the plurality of heterogeneous image sensors, will be described depending on a hardware field 360 of the image sensor and a software field 350 of the multimedia device that processes the data received from the image sensor.

Although the hardware field 360 is illustrated as a separate module in FIG. 6, it may be embedded in the multimedia device that processes the software field 350. First of all, the hardware field 360 includes a data collection field 340 and a firmware field 330.

The data collection field 340 receives original data recognized by the multimedia device from the image sensor, and includes an IR light projector, a depth image sensor, a color (RGB) image sensor, a microphone, and a camera chip.

Also, the firmware field 330 serves to connect the hardware field with the software field. Also, the firmware field 330 may be used as a host application required by a specific application, and performs downsampling and mirroring.

Accordingly, the data collection field 340 and the firmware field 330 interact with each other. The data collection field 340 and the firmware field 330 can control the hardware field 360 through their interaction. Also, the firmware field can be driven by a camera chip.

The software field 350 includes an application programming interface (API) field 320, and a middleware field 310. The API field 320 can be implemented by the controller of the multimedia device. Also, if a camera module is configured as an external device separately from the multimedia device, the API field can be implemented by a personal computer, a game console, a set-top box, etc. Also, the API field 320 could be a simple API that allows the multimedia device to drive the sensor of the hardware field.

The middleware field 310 is a recognition algorithm field and can include a depth processing middleware. Also, the middleware field can provide an application together with an explicit user control API even if the user inputs gesture through either his(her) hand or his(her) whole body. Also, the middleware field can include an algorithm that performs an operation for searching for the location of the hand of the user, an operation for tracing the location of the user, an operation for extracting skeleton features of the user, and an operation for respectively recognizing the user and background from the input image. The algorithm can be operated by using depth information, color information, IR information, and audio information, which are acquired from the hardware field.

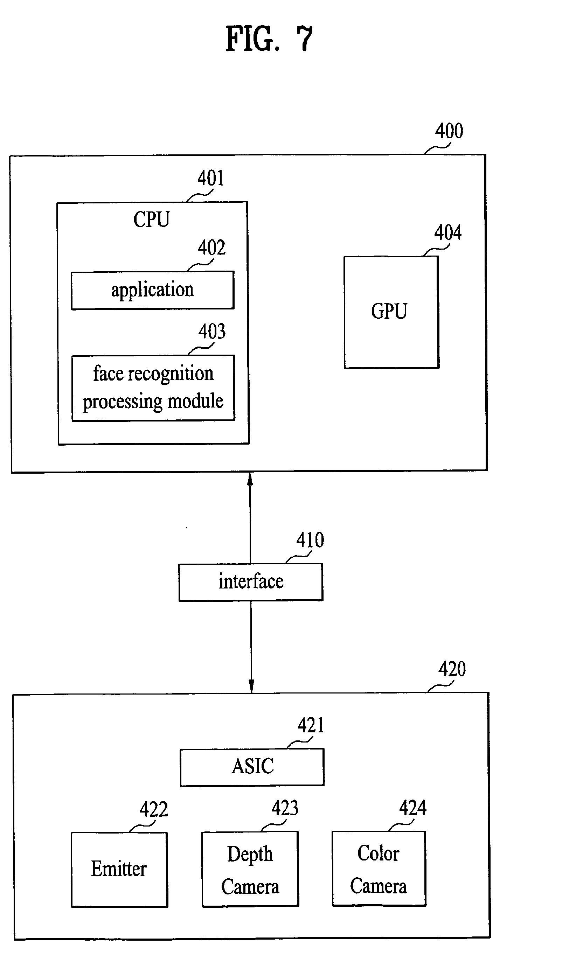

FIG. 7 shows an embodiment that includes a plurality of heterogeneous image sensors and a multimedia device. Although the heterogeneous image sensors and multimedia device are separately illustrated, in other embodiments the cameras may be designed in such a manner that they are embedded in the multimedia device.

As illustrated in FIG. 7, the multimedia device 400 is designed to include modules such as a central processing module (CPU) 401 and a graphic processing module 404, wherein the CPU 401 includes an application 402 and a face recognition processing module 403. In the mean time, a plurality of heterogeneous image sensors 420 according to one embodiment of the present invention are designed to include modules such as an application specific integrated circuit (ASIC) 421, an emitter 422, a first image sensor 423, and a second image sensor 424.

The multimedia device 400 is connected with the plurality of heterogeneous image sensors 420 through a wire or wireless interface 410. For example, a universal serial bus (USB) interface may be used as the wire or wireless interface 410.

The emitter 422 emits light to at least one user located in the periphery of the multimedia device 400. The first image sensor 423 takes a first image by using the emitted light, extracts depth data from the taken first image, and detects a face of the at least one user by using the extracted depth data. Also, the second image sensor 424 takes a second image on the face of the detected user and extracts feature information from the taken second image.

The extracted feature information is transmitted to the face recognition processing module 403 of the multimedia device through the interface 410. Although not illustrated in FIG. 7, the face recognition processing module 403 is designed to include a receiver, a memory, an extractor, and a controller.

The receiver of the face recognition processing module 403 receives feature information transmitted through the plurality of hetero image sensors 420 and the interface 410. Moreover, the memory of the face recognition processing module 403 stores feature information on at least one user and ID corresponding to the feature information.

Accordingly, the extractor of the face recognition processing module 403 extracts the ID corresponding to the received feature information from the memory, and the controller of the face recognition processing module 403 is designed to automatically perform previously set functions corresponding to the ID.

In the mean time, if the face recognition processing module is designed to be performed by the CPU of the multimedia device as illustrated in FIG. 7, it is advantageous in that the design cost of the camera is lowered, and it is also advantageous in view of extensibility such as recognition of various faces and addition of functions.

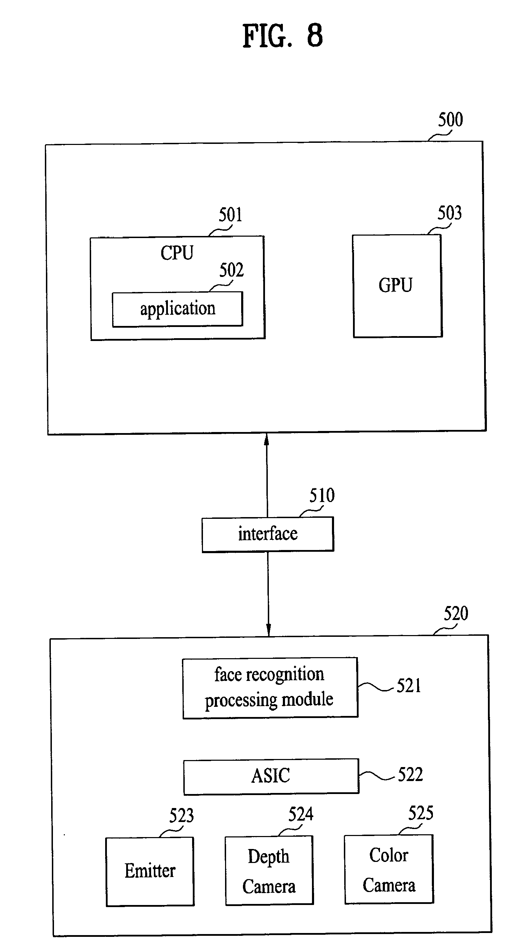

FIG. 8 shows an embodiment which includes a plurality of heterogeneous image sensors and a multimedia device. Although the plurality of heterogeneous image sensors and the multimedia device are separately illustrated, the cameras may be designed to be embedded in the multimedia device.

As illustrated in FIG. 8, the multimedia device 500 is designed to include modules such as a central processing module (CPU) 501 and a graphic processing module 503, wherein the CPU 501 includes an application 502. In the mean time, a plurality of heterogeneous image sensors 520 according to one embodiment of the present invention are designed to include modules such as a face recognition processing module 521, an application specific integrated circuit (ASIC) 522, an emitter 523, a first image sensor 524, and a second image sensor 525. The multimedia device 500 is connected with the plurality of heterogeneous image sensors 520 through a wire or wireless interface 510. For example, a universal serial bus (USB) interface may be used as the wire or wireless interface 510. It is to be understood that the modules of FIG. 8 are only exemplary and the scope of the present invention should be defined basically by claims.

FIG. 8 is different from FIG. 7 in that the face recognition module 521 is built in the plurality of heterogeneous image sensors 520. In the mean time, as illustrated in FIG. 8, if the face recognition processing module is designed to be performed by the plurality of heterogeneous image sensors 520, various types of cameras can be designed through an independent platform.

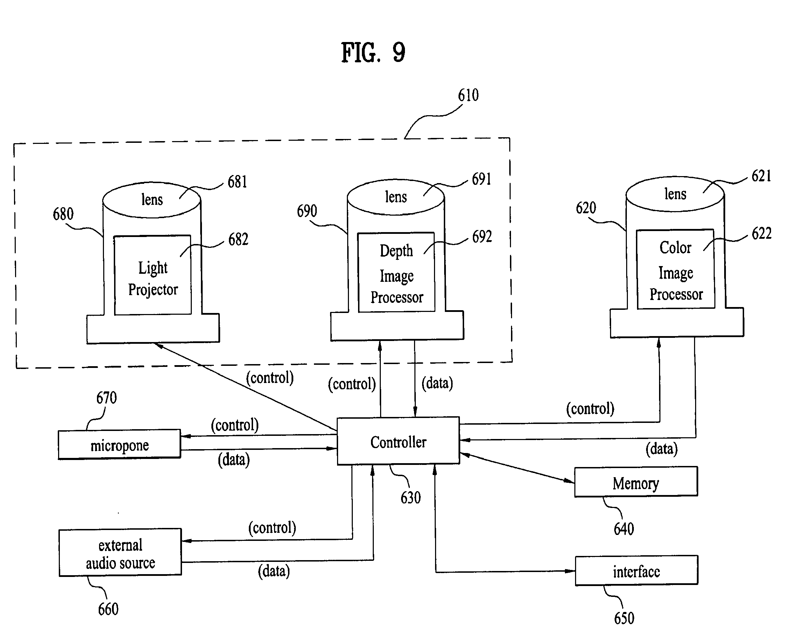

FIG. 9 shows an embodiment which includes a plurality of heterogeneous image sensors. As illustrated in FIG. 9, the plurality of heterogeneous image sensors include a first image sensor group 610, a second image sensor 620, a controller 630, a memory 640, and an interface 650, and are designed to receive audio data from a microphone 670 and an external audio source 660 under the control of the controller 630.

The memory 640, for example, may be designed as a flash memory. The interface 650 is designed as a USB interface and is connected with an external multimedia device. In the mean time, the first image sensor group 610 includes am emitter 680 and a first image sensor 690. The emitter can be designed as an infra-red (IR) emitter, for example.

Moreover, a light projector 682 of the emitter 680 projects a lens 681 to emit light to at least one user located in the periphery of the multimedia device, under the control of the controller 630. Under the control of the controller 630, the first image sensor 690 takes a first image by using the light received through a lens 691, extracts depth data from the taken first image, and transmits the extracted data to the controller 630. The controller 630 detects a face of the at least one user by using the transmitted depth data, and controls the second image sensor 620.

The second image sensor 620 takes a second image on the face of the detected user applied through a lens 621, under the control of the controller 630. Moreover, the second image sensor 620 transmits feature information extracted from the taken second image to the controller 630.

The controller 630 is designed to transmit the extracted feature information to the multimedia device by using the interface 650. Accordingly, the multimedia device that has received the feature information can quickly identify which user of users stored in the DB is the one corresponding to the taken image.

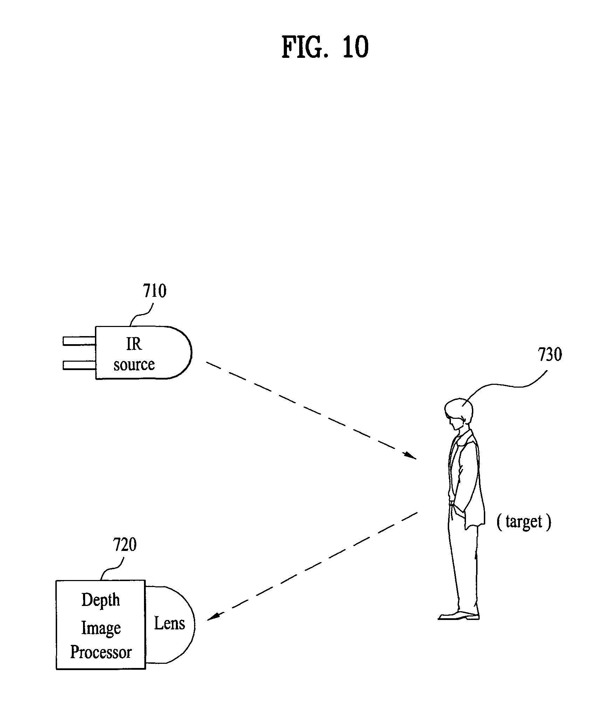

FIG. 10 shows an example of a first image sensor of the plurality of heterogeneous image sensors. As shown, an IR source 710 may correspond to the emitter 680 of FIG. 9, and a depth image processor 720 may correspond to the first image sensor 690 of FIG. 9. Accordingly, the description of FIG. 9 and FIG. 10 may complementarily be applied to this embodiment. Also, the camera illustrated in FIG. 10 may be designed in accordance with the aforementioned structured light type.

As illustrated in FIG. 10, the IR source 710 is designed to continuously project a coded pattern image to a target user 730. The depth image processor 720 estimates the location of the user by using information of an initial pattern image distorted by the target user 730.

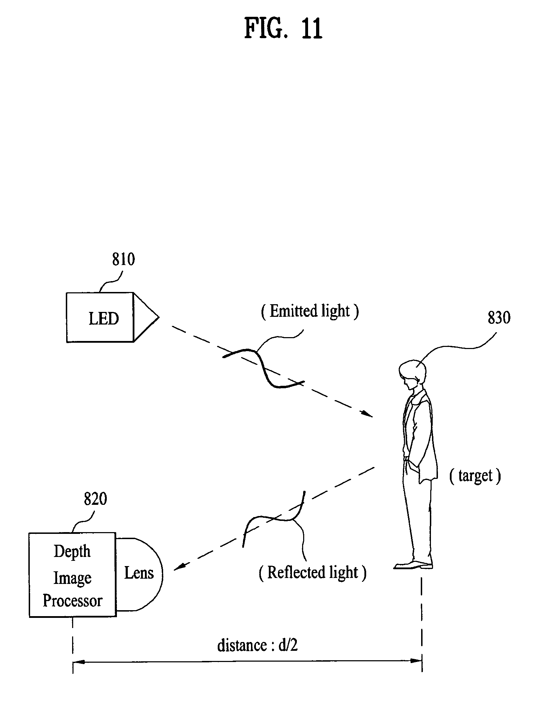

FIG. 11 is a diagram illustrating another example of a first image sensor of a plurality of heterogeneous image sensors according to one embodiment of the present invention. Hereinafter, the another example of a first image sensor of a plurality of heterogeneous image sensors according to one embodiment of the present invention will be described with reference to FIG. 11. An LED 810 illustrated in FIG. 11 may correspond to the emitter 680 of FIG. 9, and a depth image processor 820 illustrated in FIG. 11 may correspond to the first image sensor 690 of FIG. 9. Accordingly, the description of FIG. 9 and FIG. 11 may complementarily be applied to this embodiment. Also, the camera illustrated in FIG. 11 may be designed in accordance with the aforementioned TOF type.

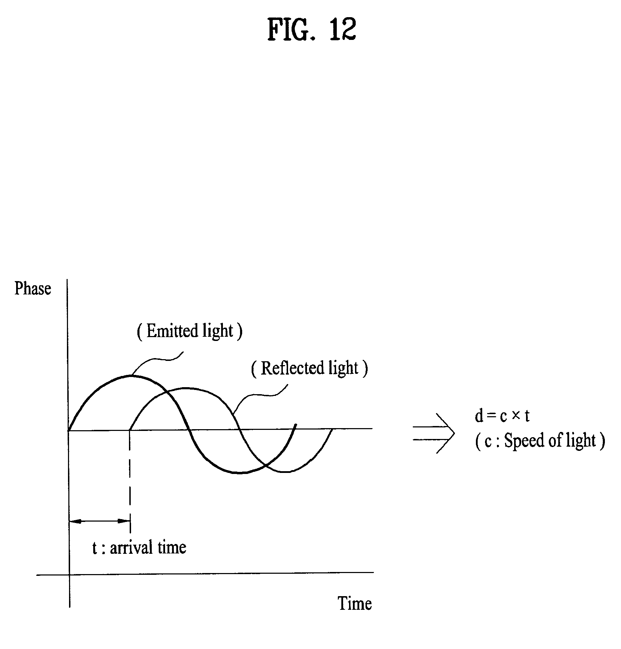

As illustrated in FIG. 11, the light emitted by the LED 810 is transmitted to a target user 830. The light reflected by the target user 830 is transmitted to the depth image processor 820. The modules illustrated in FIG. 11 calculate the location of the target user 830 by using information on the time difference, unlike FIG. 10. This will be described in more detail with reference to FIG. 12.

FIG. 12 shows one way of calculating distance using a first image sensor as illustrated, for example, in FIG. 11. In a left graph of FIG. 12, a value t which is the arrival time can be obtained through the time difference between the emitted light and the reflected light. Also, as illustrated by the equation at the right side of FIG. 12, the distance between the LED 810 and the target user 830 and the distance between the target user 830 and the depth image processor 820 are calculated by multiplication of the speed of light and the value t. Accordingly, the distance between the LED 810 or the depth image processor 820 and the target user 830 is estimated as 1/d.

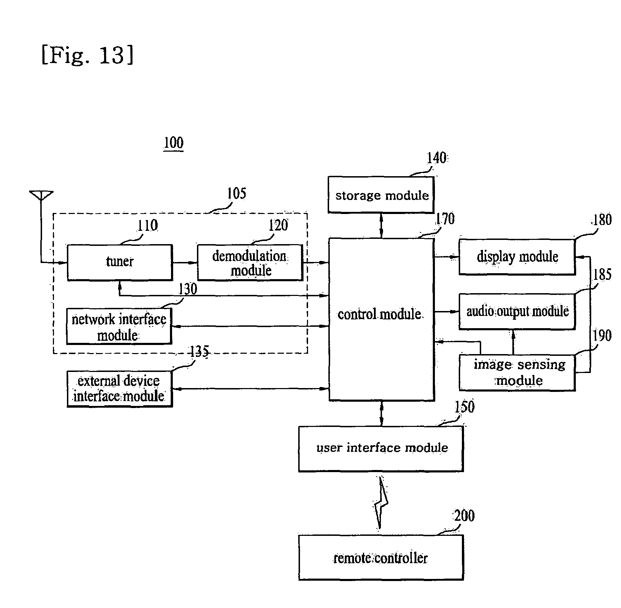

FIG. 13 shows an exemplary view of multimedia device (100), which may be connected to a broadcasting network and an Internet network. For example, the multimedia device (100) includes a connected TV, a smart TV, an HBBTV (Hybrid Broad-Band TV), a set-top box, a DVD player, a Bluray player, a gaming device, a computer, and so on.

Referring to FIG. 13, the multimedia device (100) according to one embodiment may include a broadcast receiving module (105), an external device interface module (135), a storage module (140), a user input interface module (150), a controller (170), a display module (180), an audio output module (185), an image sensing module (190). The broadcast receiving module (105) may include a tuner (110), a demodulator (120), and a network interface module (130).

Evidently, whenever required, the broadcast receiving module (105) may be designed so as to be equipped with a tuner (110) and a demodulator (120) and not to include a network interface module (130). Alternatively, the broadcast receiving module (105) may also be designed so as to be equipped with a network interface module (130) and not to include a tuner (110) and a demodulator (120).

Among a plurality of RF (Radio Frequency) broadcast signals being received through an antenna, the tuner (110) selects an RF broadcast signal respective to a channel selected by the user (or viewer) or selects an RF broadcast signal respective to all pre-stored channels. Then, the tuner (110) converts the selected RF broadcast signal to an intermediate frequency (IF) signal or a baseband video or audio signal.

The tuner (110) may also receive single-carrier RF broadcast signals according to an ATSC (Advanced Television System Committee) method or multi-carner RF broadcast signals according to a DVB (Digital Video Broadcasting) method.

After performing the demodulation and channel-decoding processes, the demodulator (120) may output a stream signal (TS). At this point, the stream signal may correspond to a multiplexed signal having a video signal, an audio signal, or a data signal multiplexed therein. For example, the stream signal may correspond to an MPEG-2 TS (Transport Stream) consisting of an MPEG-2 standard video signal multiplexed with a Dolby AC-3 standard audio signal multiplexed.

The stream signal outputted from the demodulator (120) may be inputted to the controller (170). The controller (170) performs demultiplexing and video/audio signal processing procedures on the inputted stream signal. Thereafter, the controller (170) outputs the image to the display module (180) and outputs the sound to the audio output module (185).

The external device interface module (135) may connect the external device and the multimedia device (100). The external device interface module (135) may be connected to an external device, such as a DVD (Digital Versatile Disk), a Blu ray, a gaming device, an image sensor, a camcorder, a computer (notebook), and so on, through a wired/wireless connection. The external device interface module (135) delivers the image, sound, or data signal being inputted from an outside source through an external device connected to the external device interface module (135) to the controller (170) of the multimedia device (100).

Also, the image, sound, or data signal processed by the controller (170) may be outputted to the connected external device. In order to do so, the external device interface module (135) may include an A/V input/output module (not shown) or a wireless (or radio) communications module (not shown).

The A/V input/output module may include USB terminal, a CVBS (Composite Video Banking Sync) terminal, a component terminal, an S-video terminal (analog), a DVI (Digital Visual Interface) terminal, an HDMI (High Definition Multimedia Interface) terminal, an RGB terminal, a D-SUB terminal, and so on, so as to be able to input audio and video signals of the external device to multimedia device (100).

The wireless (or radio) communications module is capable of performing close range wireless (or radio) communication with other electronic devices. Based upon the telecommunication standards, such as, for example, Bluetooth, RFID (Radio Frequency Identification), IrDA (Infrared Data Association), UWB (Ultra Wideband), ZigBee, DLNA (Digital Living Network Alliance), and so on, the multimedia device (100) may be connected to other electronic devices via network.

Furthermore, the external device interface module (135) may access diverse set-top boxes via at least one of the above-described terminals, thereby being capable of performing input/output operations with the respective set-top box.

The network interface module (130) provides an interface for connecting the multimedia device (100) to a wired/wireless network including an internet network. In order to provide connection (or access) to a wired network, the network interface module (130) may, for example, be provided with an Ethernet terminal.

In order to provide connection (or access) to a wireless network, the network interface module may be provided with diverse telecommunication standards, such as, for example, WLAN (Wireless LAN) (Wi-Fi), Wibro (Wireless broadband), Wimax (World Interoperability for Microwave Access), HSDPA (High Speed Downlink Packet Access), and so on.

The network interface module (130) may transmit data to or receive data from another user or from another electronic device through the connected network, or through another network linked to the connected network.

The storage module (140) may store programs for processing and controlling each signal within the controller (170) and may also store signal-processed video, audio or data signals.

Additionally, the storage module (140) may also perform the function of temporarily storing video, audio or data signals that are being inputted from the external device interface module (135) or the network interface module (130). Also, the storage module (140) may store information associated to particular broadcast channels through a channel memory function.

For example, the storage module (140) may include a storage medium of at least one of a flash memory type, a hard disk type, a multimedia card micro type, a card type memory (e.g., SD or XD memory, *etc*.), RAM, ROM (EEPROM, *etc*.) type. The multimedia device (100) may playback (or reproduce) contents files (moving picture files, still image files, music files, text files, application files, and so on) stored in the storage module (140), so as to provide the corresponding contents files to the user.

Although FIG. 13 shows an example wherein the storage module (140) is provided separately from the controller (170), the present invention will not be limited to the exemplary structure presented herein. The storage module (140) may also be included in the controller (170).

The user interface module (150) either delivers (or sends) a signal inputted by the user to the controller (170) or delivers a signal outputted from the controller (170) to the user.

For example, in accordance with diverse telecommunication methods, such as RF (Radio Frequency) communication, Infrared (IR) communication, and so on, the user interface module (150) receives a control signal, such as power on/off, channel selection, screen settings, and so on, from a remote controlling device (200) and processes the received signal. Alternatively, the user interface module (150) may process a control signal received from the controller (170) so that the corresponding signal can be transmitted to the remote controlling device (200).

Also, for example, the user interface module (150) may deliver a control signal that is being inputted from a sensing module (not shown), which senses a user's gesture, to the controller (170), or the user interface module (150) may transmit a signal outputted from the controller (170) to the sensing module (not shown). Herein, the sensing module (not shown) may include a touch sensor, a voice sensor, a position sensor, a motion sensor, and so on.

The controller (170) demultiplexes an inputted stream or processes demultiplexed signals, thereby generating and outputting signals for video or audio output, through the tuner (110) or the demodulator (120) or the external device interface module (135).

A video signal that is image-processed (or video-processed) by the controller (170) is inputted to the display module (180), so that the processed signal can be displayed as an image respective to the corresponding video signal. Also, the video signal that is image-processed (or video-processed) by the controller (170) may be inputted to an external output device through the external device interface module (135).

The audio signal being processed by the controller (170) may be audio outputted to the audio output module (185). Also, the audio signal being processed by the controller (170) may be inputted to an external output device through the external device interface module (135).

The display module (180) respectively converts the video (or image) signal, data signal, and OSD signal processed by the controller (170), or the video (or image) signal, data signal, and so on being received by the external device interface module (135) to R, G, and B signal, thereby generating a drive signal.

Meanwhile, in order to detect the gesture of the user, as described above, a sensing module (not shown), which is equipped with at least one of a touch sensor, a sound sensor, a position sensor, and a motion sensor, may be further provided in the multimedia device (100). A signal detected by the sensing module (not shown) may be delivered to the controller (170) through the user input interface module (150).

Meanwhile, an image sensing module (190) recording (or filming) the user may also be further included. The image information detected or recorded (filmed) by the image sensing module (not shown) may be inputted to the controller (170).

The image sensing module (190) may be configured by including a plurality of image sensors each being capable of acquiring difference types of information. And, the structure and operations of the image sensing module will be described in detail on with reference to FIG. 9.

The controller (170) may use each of the image recorded by the image sensing module (190) or the signal detected from the sensing module (not shown), individually or in combination, in order to detect (or sense) the position of the user and the gesture of the user.

Also, in order to detect the user position, the controller (170) may include a distance measuring module (not shown), and, based upon the information being inputted to the image sensing module, the distance measuring module (not shown) may search for information indicating whether or not the distance between the user and the multimedia device is being decreased or increased.

Also, in case coordinate information of each body part of the user is being recognized by image sensing module, based upon the coordinate information of each body part of the user, when the body of the user is detected to be leaned (or tilted) forward, the distance measuring module (not shown) may determine that the distance between the multimedia device and the user is decreased. And, when the body of the user is detected to be tilted backwards, the distance measuring module (not shown) may determine that the distance between the multimedia device and the user is increased.

Moreover, when a decrease signal of the distance is inputted through the distance measuring module (not shown), the controller (170) enlarges (or enlarges) the ratio of the display screen being displayed on the display module (180) and displays the enlarged display screen. And, when an increase signal of the distance is inputted through the distance measuring module (not shown), the controller (170) reduces the ratio of the display screen being displayed on the display module (180). Thus, a suitable display screen in accordance with the distance between the user and the multimedia device may be provided.

Also, when a decrease signal of the distance is inputted through the distance measuring module (not shown), the controller (170) increases the volume of the audio signal being outputted to the audio output module (185). And, when an increase signal of the distance is inputted through the distance measuring module (not shown), the controller (170) decreases the volume of the audio signal being outputted to the audio output module (185). Thus, a suitable audio output in accordance with the distance between the user and the multimedia device may be provided.

Also, in case a sound signal is included in the audio signal, the controller (170) relatively increases the volume of the sound signal included in the audio signal, thereby seeking to enhance the user convenience, when using videophone functions.

Also, when a decrease signal of the distance is detected through the distance measuring module, the controller (170) decreases the distance between select buttons or icons included in the display screen being displayed through the display module (180). And, when an increase signal of the distance is detected through the distance measuring module, the controller (170) increases the distance between select buttons or icons included in the display screen being displayed through the display module (180). Thus, a mis-manipulation of the user may be prevented.

Also, when a text signal is included in the display screen being displayed through the display module (180), and when a decrease signal of the distance is detected through the distance measuring module, the controller (170) decreases the text included in the display screen, and when an increase signal of the distance is detected through the distance measuring module, the controller (170) enlarges the text included in the display screen, thereby being capable of providing a display screen while taking into consideration the readability (or legibility) of the user.

Furthermore, when the text is enlarged, and when an entire page including the text is entirely being displayed on the display screen, the controller (170) can no longer reduce the text.

The remote controlling device (200) transmits a user input to the user interface module (150). In order to do so, the remote controlling device (200) may use the Bluetooth, RF (Radio Frequency) communications, IR (Infrared) communications, UWB (Ultra Wideband), ZigBee methods.

Also, the remote controlling device (200) receives audio, video or data signals outputted from the user interface module (150), thereby being capable of displaying the received signals or outputting sound or oscillation (or vibration) from the remote controlling device (200).

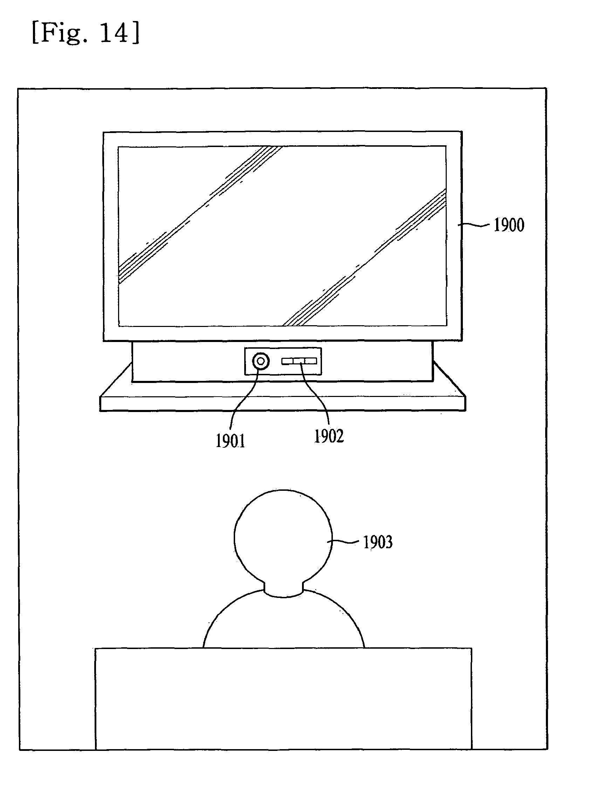

FIG. 14 shows one embodiment of a multimedia device. In order to gain the distance information of the user (1903) from the multimedia device, multimedia device (1900) acquires a user image through the image sensing modules (1901, 1902) of the multimedia device.

In order to accurately recognize the distance information of the user, the image sensing module may be configured of two image sensor modules (1901, 1902), wherein each image sensor module acquires a different type of information. More specifically, according to one embodiment, the image sensing module may include a depth image sensor and an RGB image sensor. This hereinafter be described in detail with reference to FIG. 9.

Also, as shown in the drawing, the image sensing modules (1901, 1902) of the multimedia device (1900) are positioned at a lower portion of the multimedia device, and may be used to easily detect the bodily center of the user, and being relatively less influenced by the illumination condition (or environment), the image sensing modules may easily perform gesture recognition.

According to the above-described configuration, the multimedia device acquires information on the user's current state and distance information, thereby being capable of providing a contents providing environment of the multimedia device suitable to the current state and position in accordance with the acquired information.

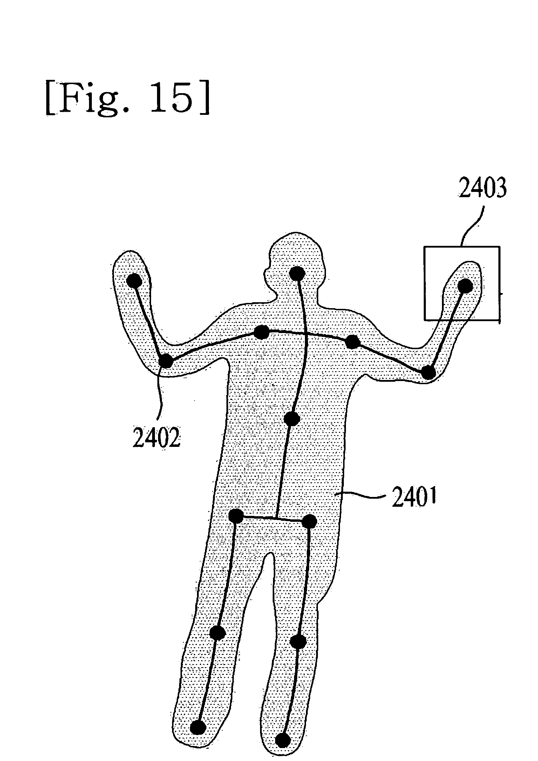

FIG. 15 shows an image acquired by a depth image sensor for recognizing coordinates corresponding to each body part of a user. Referring to FIG. 15, by using the image filmed (detected or recorded) by the depth image sensor, the multimedia device may acquire coordinate information of each body part of the user.

More specifically, in case of filming the user (2401) through the depth image sensor, the depth image sensor may acquire the distance information of the user with the image information. For example, coordinate information on only the right elbow (2402) of the user may be acquired. By doing so, in case the user seeks to input a predetermined gesture by using only a specific part (2403) of his or her body, the coordinate information of the corresponding body part (2403) may be acquired, so that the area where the corresponding body part (2403) is located can be enlarged, thereby enabling a more detailed image to be recognized.

Also, when the user performs a particular motion by moving his or her body, the shift in the distance information of each body part may be detected, thereby enabling the specific motion of the user to be recognized.

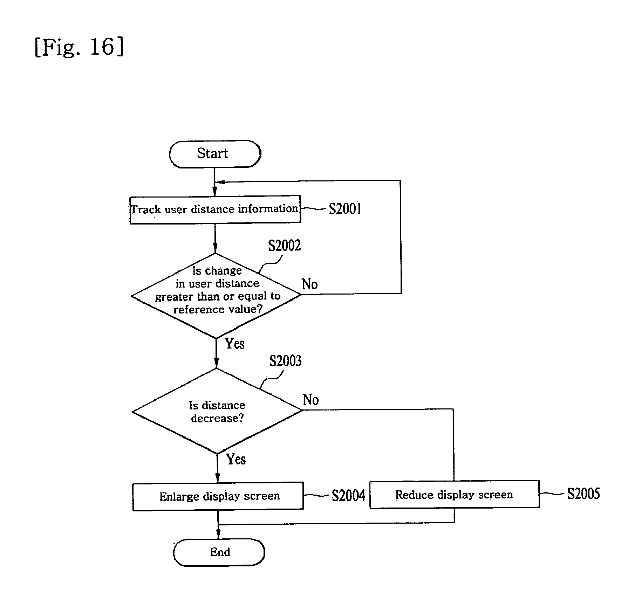

FIG. 16 shows an embodiment of a process for adjusting a display screen. While providing a predetermined content or service from the multimedia device, the multimedia device acquires distance information of the current user through the image sensing module of the multimedia device and tracks the acquired distance information (S2001).

Also, the coordinate information of the user is tracked so as to search for the movement of the user. More specifically, by searching whether or not the coordinate information of the user has been changed, the present invention may search what kind of movement the user is making. Moreover, since the depth image sensor can acquire coordinate information of each body part of the user, the depth image sensor may search for any shift in the coordinate information of each body part of the user, thereby recognizing the detailed movements, such as a forward-backward movement of the user, a movement of the user leaning forwards, a movement of the user leaning backwards, a movement of the user moving his or her arms.

Subsequently, by using the tracked distance information, it is determined whether or not the user position has been shifted as much as or more than a predetermined reference value (S2002).

According to one embodiment, the multimedia device may set-up a reference value with respect to a shift in the user's position. More specifically, by using the tracked distance information, a shift in the user's position is searched, and, only when the searched shift in the user's position is more than or equal to the predetermined reference value, the multimedia device may recognize the position of the user as being shifted.

Therefore, when the user performs fine movements, such as breathing or speaking, the multimedia device determines that there is not shift in the user's position, and the multimedia device recognizes a shift in the user's position, only when the user performs a distinctive movement. Thus, unintended movements of enlarging (or increasing) or reducing (or decreasing) the display screen may be prevented.

The predetermined reference value may be set-up as a predetermined distance range during the fabrication procedure of the multimedia device. And, depending upon user-specific settings, the user may vary the settings for the reference value.

In case there is no shift in the user's position, or, even if there is a shift in the user's position, in case the detected shift is smaller than the predetermined reference value, the multimedia device continues to track the user distance information.

Conversely, if there is a significant shift in the user's position exceeding the predetermined reference value, the multimedia device determines whether or not the distance between the user and the multimedia device is decreasing (S2003).

According to one embodiment, whether or not the distance decreases may be determined by searching the respective coordinate information of the user. More specifically, by continuing to track the coordinate information of the user, when the user approaches the multimedia device, it may be determined that the distance is being decreased.

Also, since the coordinate information of each body part of the user can be recognized, when the user approaches the multimedia device by moving shifting only the coordinate information of his or her elbow, while fixing the coordinate information of his or her pelvis, the multimedia device may recognize that the user is leaning his or her body forwards, thereby determining the distance is decreasing.

Based upon the determined result of step (S2003), when the distance is being decreased, the multimedia device enlarges (or increases) the display screen being provided from the multimedia device and provides the enlarged display screen to the user (S2004).

More specifically, the usage screen of an image content that is being used by the multimedia device may be enlarged (or increased), or a font size of a text content that is being used by the multimedia device may be reduced, or the size of an icon in a menu screen being displayed in the multimedia device and the distance between the icons may be adjusted. This will hereinafter be described in more detail with reference to FIG. 11, FIG. 12, and FIG. 13.

Conversely, based upon the determined result of step (S2002), when the distance between the user and the multimedia device is not being decreased, the multimedia device reduces (or decreases) the display screen being provided from the multimedia device and provides the reduced display screen to the user (S2005). More specifically, when the distance between the user and the multimedia device is being increased, the display screen is reduced and provided to the user.

According to this embodiment, whether or not the distance increases may be determined by searching the respective coordinate information of the user. More specifically, by continuing to track the coordinate information of the user, when the user moves further away from the multimedia device, it may be determined that the distance is being increased.

Also, since the coordinate information of each body part of the user can be recognized, when the user moves away from the multimedia device by moving shifting only the coordinate information of his or her elbow, while fixing the coordinate information of his or her pelvis, the multimedia device may recognize that the user is leaning his or her body backwards, thereby determining the distance is increasing.

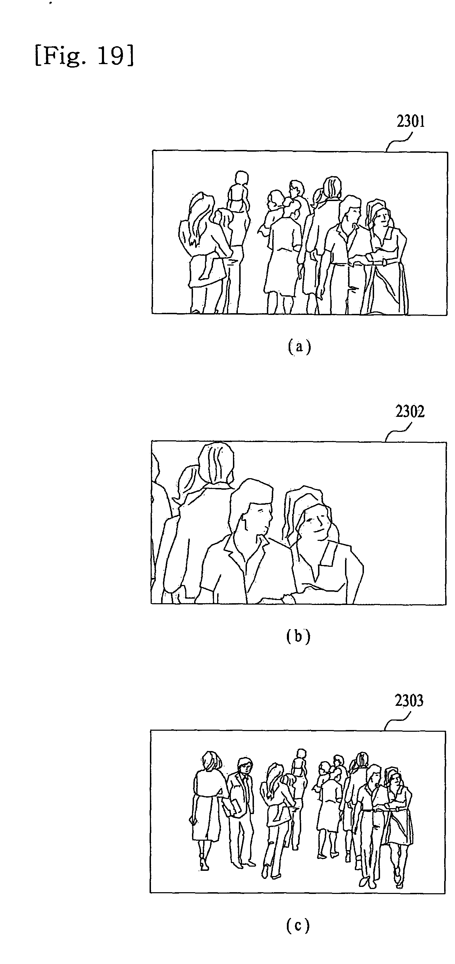

More specifically, the usage screen of an image content that is being used by the multimedia device may be reduced (or decreased), or a font size of a text content that is being used by the multimedia device may be increased, or the size of an icon in a menu screen being displayed in the multimedia device and the distance between the icons may be adjusted. This will hereinafter be described in more detail with reference to FIG. 19, FIG. 20, and FIG. 21.

Accordingly, when the user is provided with a predetermined content and service through the multimedia device, the user may be provided with a suitable display screen by simply shifting his or her position or by simply leaning forwards or backwards, without having to perform any complex manipulation.

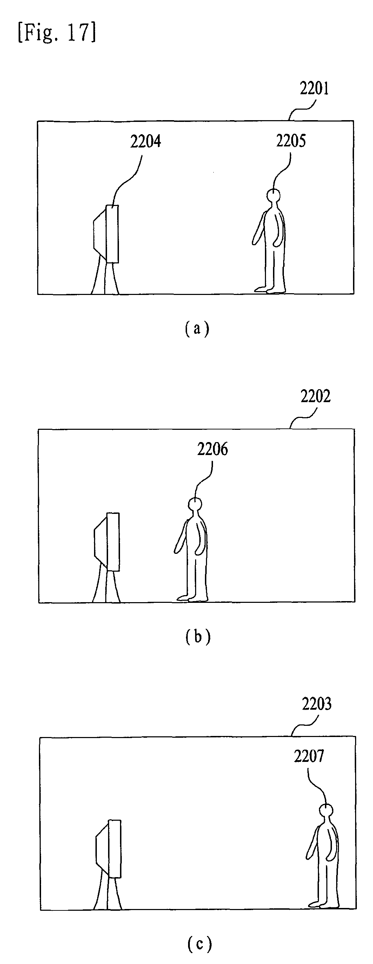

FIG. 17 shows an embodiment where a gesture is used to adjust a display screen. By shifting the user's position (2205, 2206, 2207), the user may decrease or increase the distance between the multimedia device and the user that is being recognized by the multimedia device (2204).

More specifically, referring to FIG. 17(a), the multimedia device (2204) records (or films) the user (2205) by using the image sensing module of the multimedia device, so as to acquire the distance information of the user. The acquired distance information is stored as a reference coordinate information of the user, and the tracking of the user's position is continued by using the image sensing module.

During the tracking process, as shown in FIG. 17(b), when the user approaches the multimedia device, with respect to the distance information of the user approaching the multimedia device, the coordinate information of the user is acquired once again through the image sensing module. Then, the newly acquired coordinate information of the user is compared with the stored reference coordinate information of the user, so as to determine whether the distance between the user and the multimedia device is decreased and to determine how much is the decreased distance.

During the tracking process, as shown in FIG. 17(c), as shown in the case wherein the user approaches the multimedia device, when the user moves away from the multimedia device, with respect to the distance information of the user moving away from the multimedia device, the coordinate information of the user is acquired once again through the image sensing module.

Then, the newly acquired coordinate information of the user is compared with the stored reference coordinate information of the user, so as to determine whether the distance between the user and the multimedia device is increased and to determine how much is the increased distance.

As described above, the multimedia device continues to search the coordinate information of the user, and, when the user shifts his or her position, since information on a change in the distance between the user and the multimedia device with respect to the shit in the user's position and information on the changed amount may be acquired, the display screen being provided from the multimedia device (2204) may be adjusted based upon the acquired information. This will hereinafter be described in more detail with reference to FIG. 19, FIG. 20, and FIG. 21.

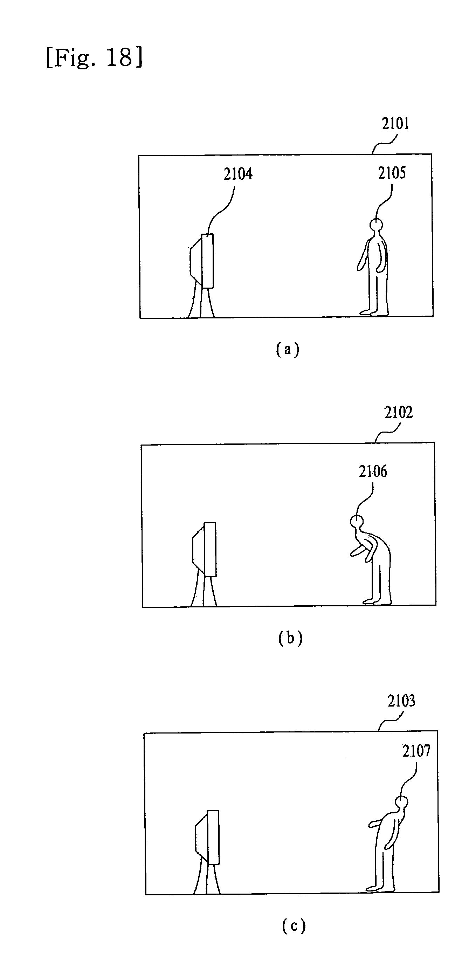

FIG. 18 shows an embodiment where a user position is used to adjust a display screen. By leaning his or her forwards or backwards (2105, 2106, 2107), the user may decrease or increase the distance between himself or herself and the multimedia device (2104).

As shown in FIG. 9, since the multimedia device may acquire coordinate information of each body part of the user through the depth image sensor of the image sensing module, by tracking each body part of the user, the multimedia device may search (or determine) whether or not the user is leaning forwards or backwards.

More specifically, referring to FIG. 18(a), the multimedia device (2104) acquires coordinate information of the user (2105) and coordinate information of each body part of the user through the depth image sensor. Then, the multimedia device stores the acquired coordinate information of the user and the acquired coordinate information of each body part of the user as the reference coordinates of the multimedia device.

Also, during the tracking process, as shown in FIG. 18(b), when the user leans his or her body towards the multimedia device, the coordinate information of the body part that is leaning towards the multimedia device is acquired through the depth image sensor. Then, the acquired coordinate information is compared with the stored reference coordinates. Accordingly, when the coordinates of the user's shoulder area approaches the multimedia device, while the coordinates of the user's pelvis indicate a state of relatively little movement, the multimedia device may recognize the user's body as leaning forwards and may also determine that the distance between the user and the multimedia device is decreased.

Also, during the tracking process, as shown in FIG. 18(c), as shown in the case wherein the user leans his or her body forwards, when the user leans his or her body backwards, the coordinate information of the body part that is leaning backwards (or away from) the multimedia device is acquired through the depth image sensor. Then, the acquired coordinate information is compared with the stored reference coordinates.

Accordingly, when the coordinates of the user's shoulder area moves away from the multimedia device, while the coordinates of the user's pelvis indicate a state of relatively little movement, the multimedia device may recognize the user's body as leaning backwards and may also determine that the distance between the user and the multimedia device is increased.

Moreover, as the distance between the user and the multimedia device is being increased or decreased, the multimedia device may adjust the display screen of the multimedia device in accordance with the increased or decreased distance. This will hereinafter be described in more detail with reference to FIG. 12, FIG. 13, and FIG. 14. More specifically, since the user can adjust the display screen of the multimedia device by simply leaning forwards or backwards, without having to shift his or her position, the present invention is advantageous in enhancing the convenience in the usage for the user.

FIG. 19 shows an embodiment where a display screen is adjusted in accordance with a user distance. When the user shifts his or her position, or when the user leans his or her body, so as to increase the distance between the multimedia device and the user or to decrease the distance, the display screen of the multimedia device may be suitably adjusted in accordance with the increased or decreased distance.

As shown in FIG. 19(a), when an image content used by the user is not entirely displayed within a single display screen, and when the user approaches the multimedia device or leans his or her body forwards, the multimedia device recognizes such movement as a gesture to have a closer view (or look) on the image and enlarges the image content, as shown in FIG. 19(b), thereby providing the enlarged image content to the user.

Conversely, when the user moves further away from the multimedia device or leans his or her body backwards, the multimedia device recognizes such movement as a gesture to view the image by enlarging the display area of the image. And, accordingly, as shown in FIG. 19(c), the multimedia device may enlarge the display area of the image content and display the enlarged display area of the corresponding image. Furthermore, when all display areas of the image content that is being used are displayed on the display screen, the multimedia device may be controlled so that the image content is no longer reduced.

Additionally, the expansion or reduction ratio of a display area may be adjusted in accordance with the moved (or shifted) distance of the user, in case the user shifts his or her position, and the expansion or reduction ratio of a display area may be adjusted in accordance with an inclination angle of the user, in case the user leans his or her body.

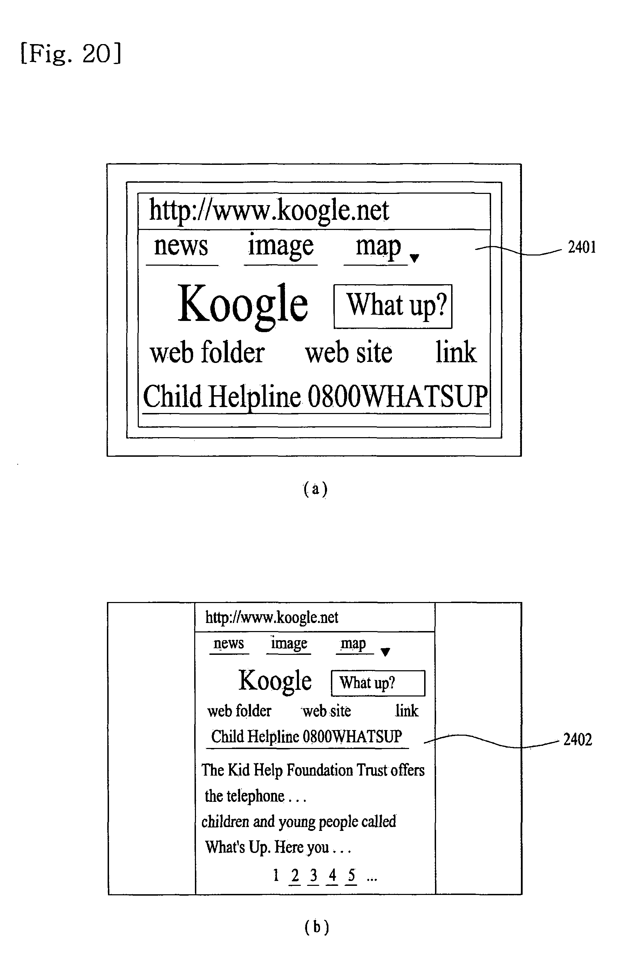

FIG. 20 shows an embodiment where a display screen is adjusted in accordance with a user distance. When a text content is being used in the multimedia device, depending upon the distance between the multimedia device and the user, the font size of the text content that is being used may be adjusted. The text content may include viewing a document file in the multimedia device, or viewing a web page including a predetermined text through the Internet.

More specifically, when a web page including a text (2401), as shown in the display screen of FIG. 20(a), is being displayed in the multimedia device, in case the user approaches the multimedia device, or in case the user leans his or her body towards the multimedia device, the multimedia device determined that the distance between the user and the multimedia device is decreasing. Therefore, the multimedia device may reduce the font size of the text, thereby displaying the adjusted text.

More specifically, in case the distance is being decreased, the user's readability with respect to the text being displayed by the multimedia device increases. Thus, by reducing the font size of the text (2402), as shown in FIG. 20(b), a larger amount of text may be displayed within a single display screen. Also, in case all areas of the text content, which is currently being used, is displayed, the multimedia device may be controlled so that the font size is no longer reduced.

Conversely, when the user moves further away from the multimedia device, or when the user tilts (or leans) his or her body towards a direction moving further away from the multimedia device, the distance between the user and the multimedia device increases, and the user's readability with respect to the text being displayed by the multimedia device increases. Therefore, the font size of the text may be enlarged (or increased) and displayed.

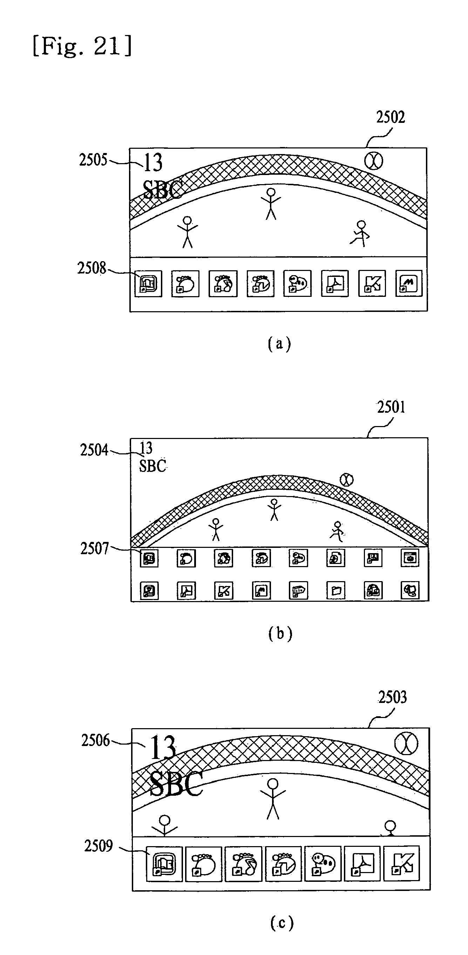

FIG. 21 shows another embodiment where a display screen is adjusted in accordance with a user distance. When displaying a predetermined menu screen through an OSD (On Screen Display) in the multimedia device, the menu screen that is currently being used may be adjusted in accordance with the distance between the multimedia device and the user.

More specifically, in the multimedia device, when displaying a menu screen, as shown in FIG. 21 (a), the menu screen may include a predetermined icon list (2508), and the menu screen may also include information (2505) on a content, which is currently being used in the multimedia device.

While the display screen is being displayed, as shown in FIG. 21(a), when the user approaches the multimedia device or leans his or her body towards the multimedia device, and when the multimedia device recognizes (or determines) that the distance between the multimedia device and the user is decreasing, the multimedia device may provide a display screen, as shown in FIG. 21 (b), to the user.

More specifically, since the user's readability with respect to the display screen increases as the distance decreases, information (2504) on a content that is being used by the multimedia device, as shown in FIG. 21(b), is reduced to a size smaller than the information (2505) of FIG. 21 (a), thereby being displayed. And, the size of an icon (2507) included in the menu is also reduced to a size smaller than the icon (2508) of FIG. 21(a), thereby being displayed. Accordingly, the user may be provided with a larger range of information and a larger list of icons from one display screen.

Also, due to a reduction in the size of the icon (2507), the possibility of selecting a wrong icon, which is caused by a mistake made during the manipulation of the multimedia device, may increase. Therefore, information (2506) on the content that is currently being used by the multimedia device, as shown in FIG. 21 (c), may be enlarged (or increased) to be larger than the information (2505) of FIG. 21 (a), thereby being displayed. And, the size of the icon (2509) included in the menu screen may also be enlarged to be larger than the icon (2508) of FIG. 21(a), thereby being displayed. Accordingly, even when the user's readability is decreased, the user may easily acquire information on the contents and information on the icon.

Furthermore, due to an increase in the size of the icon (2509), the possibility of a mis-operation (or malfunction) from occurring during the manipulation of the multimedia device, may decrease. Therefore, the distance between the icons (2509) may be reduced, and a larger number of icons may be displayed in accordance with the reduced distance between the icons.

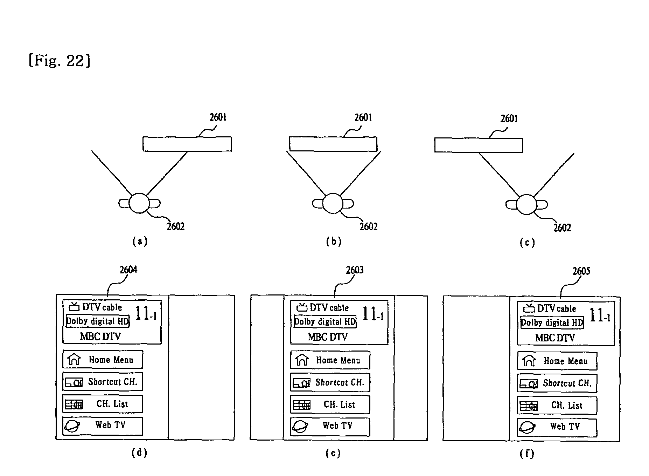

FIG. 22 shows relative positions of the multimedia device and the user. In this embodiment, the multimedia device may change the display screen according to the position of the user, while taking into consideration the multimedia device and a viewing angle of the user.

The viewing angle refers to a maximum tilted angle allowing a normal view of the screen from the multimedia device. Unlike a cathode ray tube monitor, a liquid crystal display device has the characteristics of having a large variation range in brightness and contrast ratio depending upon the viewing angle. Herein, the angle maintaining this contrast ratio to more than or equal to a predetermined value is referred to as the viewing angle. More specifically, the user may view the screen at a normal brightness level only when the user is located (or positioned) within the range of the viewing angle.

Therefore, when the user (2602) is positioned right in front of the multimedia device (2601), as shown in FIG. 14(b), all regions (or areas) of the display module of the multimedia device are located (or positioned) within the viewing angle range of the multimedia device and the user. Thus, the multimedia device may display a display screen (2603) of a normal state, as shown in FIG. 14(e), thereby being capable of providing a content or service to the user.

Conversely, when the user (2602) is positioned at the left side of the multimedia device (2601), as shown in FIG. 14(a), not all regions (or areas) of the display module of the multimedia device are located (or positioned) within the viewing angle range of the multimedia device and the user. Therefore, by providing a display screen, as shown in FIG. 14(d), the multimedia device may not be able to display a content or service in a display area that is not included in the viewing angle range.

Furthermore, when the user (2602) is positioned at the right side of the multimedia device (2601), as shown in FIG. 14(c), similarly, not all regions (or areas) of the display module of the multimedia device are located (or positioned) within the viewing angle range of the multimedia device and the user. Therefore, by providing a display screen, as shown in FIG. 14(f), the multimedia device may not be able to display a content or service in a display area that is not included in the viewing angle range.

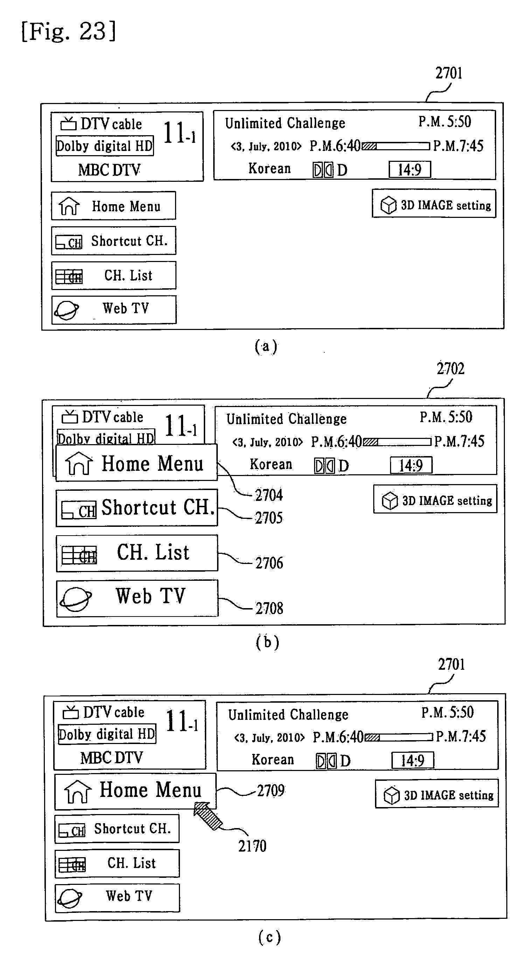

FIG. 23 shows an embodiment where a menu screen of the multimedia device is changed (or modified). As the distance between the multimedia device and the user is being changed, the configuration of the menu screen being displayed on the multimedia device may also be adjusted.

More specifically, in the case distance between the user and the multimedia device is short (or close), the user's readability is increased. Therefore, the size of menu items and text included in the menu screen may be reduced and displayed. Conversely, in the case distance between the user and the multimedia device is far apart, the user's readability is decreased. Therefore, the size of menu items and text included in the menu screen may be enlarged and displayed.

Referring to FIG. 23(a), the multimedia device may display a predetermined menu screen (2701), and the menu screen may include a predetermined set of menu items and text. However, in case the distance between the user and the multimedia device increases, the multimedia device may display the menu screen as shown in FIG. 23(b) and FIG. 23(c).

More specifically, according to one embodiment, FIG. 23(b) illustrates a display screen (2702) with an enlarged menu screen, in case the distance between the user and the multimedia device is increasing. As the distance between the user and the multimedia device increases, the user's s readability decreases. Therefore, by enlarging the size of the menu items (2704, 2705, 2706, 2708) included in the menu screen and displaying the enlarged menu items, any error in manipulation performed by the user may be reduced.

Also, according to another embodiment, FIG. 23(b) illustrates a display screen (2703) enlarging only the high-lighted menu items. As shown in FIG. 23(b), all menu items may be enlarged and displayed in accordance with the increase in the distance between the user and the multimedia device. However, in case a predetermined pointer (2710) is positioned on a specific menu item, or in case a specific menu item is selected, only the specific menu item (2709) is enlarged and displayed, thereby enabling the user to acquire information on the selected specific menu item more easily.

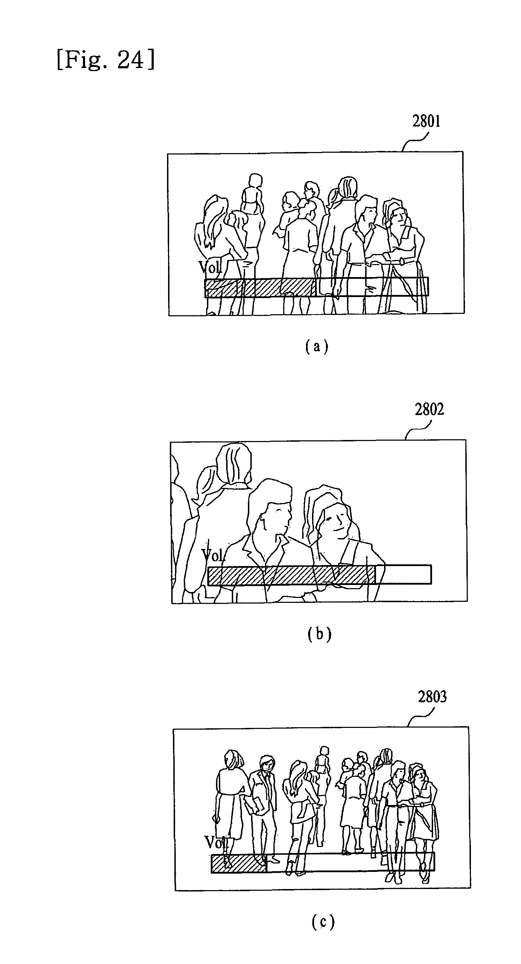

FIG. 24 shows an embodiment where a volume of the multimedia device is changed. As the distance between the multimedia device and the user is being changed, as shown in FIG. 11, the display screen of the multimedia device may be enlarged or reduced. And, along with the enlargement or reduction of the display screen, the volume of a sound signal of the multimedia device may also be changed.

More specifically, when the user shifts his or her position, or when the user tilts (or leans) his or her body, and when the multimedia device recognizes such movement of the user as an increase in the distance between the multimedia device and the user, or as a decrease in the distance, the volume of the sound signal of the multimedia device may be adjusted to a suitable level in accordance with the increased or decreased distance.

As shown in FIG. 24(a), in case the volume of an image content that is being used by the user is maintained at a constant level, and when the user approaches the multimedia device or leans his or her body forwards, the multimedia device recognizes such movement of the user as a gesture seeking to view the image and to listen to the sound more closely. Accordingly, as shown in FIG. 24(b), the image content may be enlarged, and the audio (or sound) volume may be increased (or amplified), so as to be provided to the user.

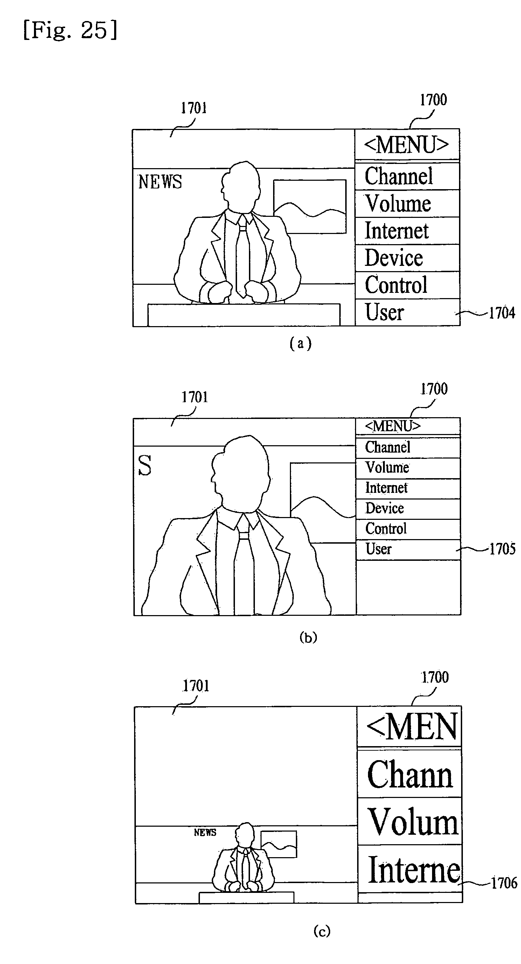

Conversely, when the user moves further away from the multimedia device, or when the user leans his or her body backwards, the multimedia device recognizes such movement of the user as a gesture seeking to expand the display area of the image and to decrease the audio (or sound) volume. Accordingly, as shown in FIG. 25(c), the multimedia device expands (or enlarges) the display area of the image content, and reduces the audio volume of the image content, thereby provided the adjusted image content to the user.

Also, the increase or decrease ratio of an audio (or sound) volume may be adjusted in accordance with the moved (or shifted) distance of the user, in case the user shifts his or her position, and the degree of inclination, in case the user leans his or her body.

Additionally, depending upon the user settings, unlike as shown in FIG. 25, depending upon the user settings, in case the distance between the user and the multimedia device is being decreased, the audio volume is also decreased. And, in case the distance between the user and the multimedia device is being increased, the audio volume is also increased.

Furthermore, although the audio volume is given as an example in FIG. 25, other adjustable elements that can provide a suitable viewing environment (or condition) to the user via level adjustment in the multimedia device, such as a brightness, a contrast ratio, and so on, of the display screen in the multimedia device may have the respective levels adjusted along with the audio volume.

FIG. 25 shows an embodiment where a display screen is adjusted in accordance with user distance. As shown in FIG. 25(a), the multimedia device may display (1700) a content image along with a menu screen. For example, when the display module of the multimedia device has a screen ratio of 21:9, a portion of the multimedia device may display a portion of the content image (1701) corresponding to a ratio of 16:9, and the multimedia device may display a menu screen (1704) at the area corresponding to 5:9 of the display screen, wherein the content image is not displayed on the 5:9 area.

Therefore, in case the distance between the multimedia device and the user is being changed, the display screen of the multimedia device may be enlarged or reduced, and the menu screen of the multimedia device may also be enlarged or decreased accordingly.

More specifically, in case the user approaches the multimedia device, the multimedia device recognizes such movement of the user as a gesture of seeking to have a closer view of the display screen of the multimedia device. Accordingly, as shown in FIG. 25(b), the multimedia device may enlarge the image content. Additionally, as the distance between the user and the multimedia device decreases, the user's readability increases. Therefore, the multimedia device may reduce the menu screen so that the display screen includes a wider range of information, thereby being displayed.

Conversely, in case the user moves further away from the multimedia device, the multimedia device recognizes such movement of the user as a gesture of seeking view image by expanding (or enlarging) the display area of the image. Accordingly, as shown in FIG. 25(c), the multimedia device may expand the display area of the image by reducing the image content. Additionally, as the distance between the user and the multimedia device increases, the user's readability decreases. Therefore, the multimedia device may enlarge the menu screen and provide the enlarged menu screen to the user.

The embodiments described herein may be realized, in whole or part, as code that can be read by a processor provided in the multimedia device in a recording medium that can be read by a processor. The recording medium that can be read by the processor includes all types of recording devices storing data that can be read by the processor.

Examples of the recording media that can be read by a processor may include ROMs, RAMs, CD-ROMs, magnetic tapes, floppy disks, optical data storing devices, and so on. Also, an exemplary recording medium being realized in the form of a carrier wave, such as a transmission via Internet, may also be included. Also, the recording medium that can be read by a processor may be scattered within a computer system, which is connected through a network. And, a code that can be read by the processor may be stored and executed by using a dispersion (or scattering) method.

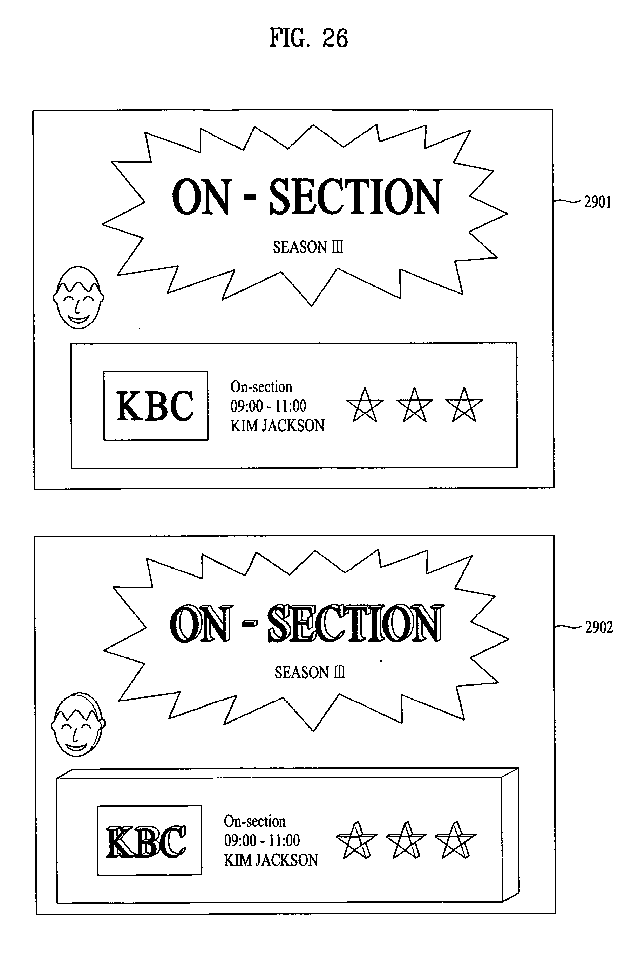

FIG. 26 relates to another embodiment which provides a display device having a sensor to track movement of at least one body part of a person and a processor to compare an amount of the tracked movement to a reference value. The processor recognizes a position shift when the amount of tracked movement exceeds the reference value, and the processor then performs at least one predetermined function of the display device based on the position shift. In FIG. 26, the predetermined function is shown to be changing a type of image displayed on a screen from a two-dimensional image (2901) to a three-dimensional image (2902), or from a three-dimensional image (2902) to a two-dimensional image (2901).

Another embodiment provides a display device which includes a sensor to track movement of at least one body part of a person and a processor to compare an amount of the tracked movement to a reference value. The processor recognizes a position shift when the amount of tracked movement exceeds the reference value, and performs at least one predetermined function of the display device based on the position shift.

The predetermined function includes changing an aspect ratio of a first region on a screen or a second region on the screen, the first region changed from a first aspect ratio to a second aspect ratio or the second region changed from a third aspect ratio to a fourth aspect ratio. These features are shown, for example, in FIG. 25. In accordance with one embodiment, both regions (the region displaying the program and the region displaying the menu) may be changed in terms of their aspect ratios.

Another embodiment may apply to a gaming context. For example, the first and second image sensors of the display device may recognize various gestures or motions made by a user, and then the processor may interpret these motions or gestures to correspond to specific commands or input values. These commands and/or values may then be used as a basis for controlling a function in a game application operating on the display device, and corresponding changes may appear, for example, in the game as various gaming screens are displayed.

Another embodiment may include automatically executing an application or program upon recognition of a specific user. The application may be virtually any application including but not limited to a scheduling or calendar application, a photo album application, e-mail application corresponding to that user's e-mail account, an instant messaging application, automatic execution or access to a social networking, video chat, financial, investment, webcam, or other type of website, automatic access to a predetermined web browser, as well as other internet or application-based functions.

The aforementioned webcam may be remotely located from the display device or directed connected thereto. If remotely located, the display device may access and display webcam video based on recognition of a specific user. Data may be stored in a database included in or accessed by the display device linking the recognition of each of a plurality of user's to respective applications and/or programs.

Another embodiment involves controlling the movement, appearance, or other action in the screen of a video game or other game application based on poses recognized by the sensors and processor of the multimedia system.

One or more embodiments described herein provide a multimedia device and method for operating the same that can enhance the convenience in usage for the user by providing a suitable display screen in accordance with the distance of the user.

One or more embodiments also provide a multimedia device and a method for operating the same that can provide diverse user interfaces in accordance with the distance of the user.

In accordance with at least one embodiment, a method of providing a display screen of a multimedia device includes the steps of acquiring distance information of a user, and tracking the distance information; when a distance between the multimedia device and the tracked distance information is being reduced, enlarging the display screen; and when a distance between the multimedia device and the tracked distance information is being increased, reducing the display screen.

According to another embodiment of the present invention, a method of providing a display screen of a multimedia device includes the steps of acquiring distance information of a user, and tracking the distance information; when a distance between the multimedia device and the tracked distance information is being reduced, reducing a text included in the display screen; and when a distance between the multimedia device and the tracked distance information is being increased, increasing the text included in the display screen.

By using a recording medium the recording playback method and the recording playback device according to the present invention, reliability in data may be ensured when playing-back the recording medium.

When used herein, the suffixes "module" for the elements used in the following description are given or used in common by considering facilitation in writing this disclosure only but fail to have meanings or roles discriminated from each other. The "module" can be designed in hardware or software.

A multimedia device as described herein corresponds to various types of devices that receive and process broadcast data, for example. Moreover, the multimedia device may correspond to a connected TV. The connected TV may be provided with, for example, a wire and wireless communication device in addition to a broadcasting receiving function.

Accordingly, the connected TV may be provided with a more convenient interface such as a manual input module, a touch screen or a motion recognition remote controller. Also, the connected TV enables e-mailing, web browsing, banking or games by accessing Internet or computer in accordance with the support of wire or wireless Internet function. For these various functions, a standardized general-purpose operating system (OS) can be used.

Accordingly, since the connected TV can freely be provided with or delete various applications on a general-purpose OS kernel, it may perform user-friendly various functions. More detailed examples of the connected TV include a web TV, an Internet TV, an HBBTV, a smart TV, and a DTV. The connected TV may be applied to a smart phone as the case may be.

In accordance with another embodiment, a display device, comprises a sensor to track movement of at least one body part of a person; and a processor to compare an amount of the tracked movement to a reference value, to recognize a position shift when the amount of tracked movement exceeds the reference value, and to perform at least one predetermined function of the display device based on the position shift, wherein the predetermined function includes changing at least one of a number of menu icons on the screen or a distance between menu icons on the screen.

The changing function may further include changing a size of content on the screen based on the position shift, or may further include changing the size of the content includes changing display of the content from a first zoom value to a second zoom value, wherein the content displayed at the second zoom value shows more information on the screen than the content displayed at the first zoom value.

The changing function may also include changing the size of the content includes changing display of the content from the first zoom value to a second zoom value, wherein the content displayed at the second zoom value shows less information on the screen than the content displayed at the first zoom value.

The sensor may track movement of first and second body parts of the person. Also, the processor may determine an amount of movement of the first body part, determine an amount of movement of the second body part, and determine the position shift by comparing the amount of movement of the first body part relative to the amount of movement of the second body part. The position shift is determined to be a lean when the amount of movement of the first body part is greater than the amount of movement of the second body part.

In addition, the processor may change a volume of the display device based on recognition of another position shift. Also, the changing function may includechanging a size of content display on the screen, and changing a size of a menu simultaneously displayed on the screen with the content. The size of the content may be increased and the size of the menu is decreased, or vice versa.

In accordance with another embodiment, a display device includes a sensor to track movement of at least one body part of a person and a processor to compare an amount of the tracked movement to a reference value, to recognize a position shift when the amount of tracked movement exceeds the reference value, and to perform at least one predetermined function of the display device based on the position shift, wherein the predetermined function includes changing an image type displayed on a screen between a two-dimensional image and a three-dimensional image.

In accordance with another embodiment, the display device includes a sensor to track movement of at least one body part of a person and a processor to compare an amount of the tracked movement to a reference value, to recognize a position shift when the amount of tracked movement exceeds the reference value, and to perform at least one predetermined function of the display device based on the position shift, wherein the predetermined function includes changing an aspect ratio of a first region on a screen or a second region on the screen, the first region changed from a first aspect ratio to a second aspect ratio or the second region changed from a third aspect ratio to a fourth aspect ratio.

The predetermined function may include changing an aspect ratio of the first region on the screen and a second region on the screen, the first region changed from the first aspect ratio to the second aspect ratio and the second region changed from the third aspect ratio to the fourth aspect ratio. The first aspect ratio may be 16x9, the second aspect ratio may be 17x9 or 21x9, the third aspect ratio may be 5x9, and the fourth aspect ratio may be 4x9. In other embodiments, any aspect ratio may be changed to any other aspect ratio.

In accordance with another embodiment, a control method comprises tracking movement of at least one body part of a person; comparing an amount of the tracked movement to a reference value; recognizing a position shift when the amount of tracked movement exceeds the reference value, and performing at least one predetermined function of the display device based on the position shift, wherein the predetermined function includes changing at least one of a number of menu icons on the screen or a distance between menu icons on the screen.

The changing step may further include changing a size of content on the screen based on the position shift. Changing the size of the content may include changing display of the content from a first zoom value to a second zoom value, wherein the content displayed at the second zoom value shows more information on the screen than the content displayed at the first zoom value.

Changing the size of the content includes changing display of the content from the first zoom value to a second zoom value, wherein the content displayed at the second zoom value shows less information on the screen than the content displayed at the first zoom value.

The tracking step may include tracking movement of first and second body parts of the person. Additional steps may include determining an amount of movement of the first body part, determining an amount of movement of the second body part, and determining the position shift by comparing the amount of movement of the first body part relative to the amount of movement of the second body part.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. The features of any one embodiment may be combined with features of the other embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A display device, comprising:
a sensor to track movement of at least one body part of a person; and
a processor to compare an amount of the tracked movement to a reference value, to recognize a position shift when the amount of tracked movement exceeds the reference value, and to perform at least one predetermined function of the display device based on the position shift, wherein the predetermined function includes changing at least one of a number of menu icons on the screen or a distance between menu icons on the screen.

2. The display device of claim 1, wherein said changing further includes:
changing a size of content on the screen based on the position shift.

3. The display device of claim 2, wherein changing the size of the content includes changing display of the content from a first zoom value to a second zoom value, wherein the content displayed at the second zoom value shows more information on the screen than the content displayed at the first zoom value.

4. The display device of claim 2, wherein changing the size of the content includes changing display of the content from the first zoom value to a second zoom value, wherein the content displayed at the second zoom value shows less information on the screen than the content displayed at the first zoom value.

5. The display device of claim 1, wherein the sensor tracks movement of first and second body parts of the person.

6. The display device of claim 5, wherein the processor:
determines an amount of movement of the first body part,
determines an amount of movement of the second body part, and
determines the position shift by comparing the amount of movement of the first body part relative to the amount of movement of the second body part.

7. The display device of claim 6, wherein the position shift is determined to be a lean when the amount of movement of the first body part is greater than the amount of movement of the second body part.

8. The display device of claim 1, wherein the processor changes a volume of the display device based on recognition of another position shift.

9. The display device of claim 1, wherein the function includes:
changing a size of content display on the screen, and
changing a size of a menu simultaneously displayed on the screen with the content.

10. The display device of claim 9, wherein the size of the content is increased and the size of the menu is decreased.

11. A control method comprising:
tracking movement of at least one body part of a person;
comparing an amount of the tracked movement to a reference value;
recognizing a position shift when the amount of tracked movement exceeds the reference value, and
performing at least one predetermined function of the display device based on the position shift, wherein the predetermined function includes changing at least one of a number of menu icons on the screen or a distance between menu icons on the screen.

12. The method of claim 11, wherein said changing further includes:
changing a size of content on the screen based on the position shift.

13. The method of claim 12, wherein changing the size of the content includes changing display of the content from a first zoom value to a second zoom value, wherein the content displayed at the second zoom value shows more information on the screen than the content displayed at the first zoom value.

14. The method of claim 12, wherein changing the size of the content includes changing display of the content from the first zoom value to a second zoom value, wherein the content displayed at the second zoom value shows less information on the screen than the content displayed at the first zoom value.

15. The method of claim 11, wherein said tracking includes tracking movement of first and second body parts of the person.

16. The method of claim 15, further comprising:
determines an amount of movement of the first body part,
determines an amount of movement of the second body part, and
determines the position shift by comparing the amount of movement of the first body part relative to the amount of movement of the second body part.
